# EUROPÄISCHE PATENTSCHRIFT

(11) **EP 3 609 429 B1**
(45) Veröffentlichungstag und Bekanntmachung des Hinweises auf die Patenterteilung: **08.03.2023**
(21) Anmeldenummer: 18720127.2
(22) Anmeldetag: 11.04.2018
(51) Int. Cl.: A61C 1/18, A61C 1/05, F16C 41/00, F16C 33/78, F16C 19/06

(54) **WÄLZLAGER UND MEDIZINISCHES ODER DENTALES, DRUCKGASBETRIEBENES HANDSTÜCK**
ROLLER BEARING AND MEDICAL OR DENTAL FLUID-DRIVEN HANDPIECE
PALIER À ROULEMENT ET PIÈCE À MAIN MÉDICALE OU DENTAIRE, FONCTIONNANT AVEC UN GAZ SOUS PRESSION

(30) Priorität: 11.04.2017 EP 17165945
(43) Veröffentlichungstag der Anmeldung: 19.02.2020
(73) Patentinhaber: W & H Dentalwerk Bürmoos GmbH, 5111 Bürmoos (AT)
(72) Erfinder: BRUCKBAUER, Martin, 5111 Bürmoos (AT); ROTHENWÄNDER, Michael, 5114 Göming (AT); PLOY, Gernot, 5111 Bürmoos (AT); EIBL, Johann, 5230 Mattighofen (AT)
(74) Vertreter: Benda, Ralf
(86) Internationale Anmeldenummer: PCT/EP2018/059261
(87) Internationale Veröffentlichungsnummer: WO 2018/189229

(56) Entgegenhaltungen:
- DE-A1- 10 320 903
- DE-A1-102012 000 757
- JP-A- 2006 129 967
- US-A- 5 642 946

## Beschreibung

Die vorliegende Erfindung betrifft ein Wälzlager für ein medizinisches oder dentales, druckgasbetriebenes Handstück, das einen äußeren Laufring, einen inneren Laufring und zumindest einen Rollkörper, der zwischen dem äußeren Laufring und dem inneren Laufring angeordnet ist, umfasst. Die vorliegende Erfindung betrifft auch ein medizinisches oder dentales, druckgasbetriebenes Handstück mit einem derartigen Wälzlager.

An dem Wälzlager ist eine elastische Bremseinrichtung vorgesehen, die kontaktierend auf das Wälzlager einwirkt, um eine Drehbewegung des Wälzlagers und/ oder des mit dem Wälzlager verbundenen Bauteils abzubremsen, um so, insbesondere beim Auslaufen des Handstücks, einen raschen Stillstand des Drehteils oder eines damit verbundenen Werkzeugs zu bewirken. Die Bremswirkung basiert somit aufgrund des Kontaktes zwischen der elastischen Bremseinrichtung und dem Wälzlager oder dem Bauteil insbesondere auf Reibung.

Ein derartiges Wälzlager ist zum Beispiel aus der Anmeldeschrift EP 3 239 547 A1 bekannt. Die elastische Bremseinrichtung dieses Wälzlagers weist mehrere Nachteile auf. So ist zum Beispiel die Herstellung dieser elastischen Bremseinrichtung aufwändig und die Montage der Bremseinrichtung an dem Wälzlager kompliziert. Des Weiteren nimmt die Bremswirkung aufgrund von Verschleiß mit zunehmender Benutzungsdauer erheblich ab und die Befestigung der elastischen Bremseinrichtung an dem Wälzlager benötigt viel Platz.

Die Offenlegungsschrift DE 10 2012 000 757 A1 offenbart ein Wälzlager gemäß dem Oberbegriff des Anspruchs 1.

Die Offenlegungsschrift DE 103 20 903 A1 beschreibt eine außerhalb eines Wälzlagers angeordnete Ringdichtung, die das Lager abdichtet und bei Zufuhr von Druckluft von einem zylindrischen Rotorschaft abhebt und bei Beendigung der Druckluftzufuhr an dem Rotorschaft anliegt, um ihn zu stoppen.

Das Patent US 5,642,946 zeigt ein Kugellager mit zwei Reihen nebeneinander angeordneten Rollkörpern, zwischen denen eine Dichtungsvorrichtung mit zwei koaxialen Dichtungen aus einem flexiblen Material angeordnet sind. Durch das Lager und die Dichtungsvorrichtung verlaufen Kanäle für den Durchtritt eines Fluids.

Das Patentanmeldung JP 2006-129967 A offenbart ein gattungsfremdes Wälzlager mit einem Schild und einem verkürzten Laufring zur Bildung eines labyrinthartigen Dichtsystems, um das Eindringen von Verschmutzungen in das Wälzlager und den Austritt von Schmiermittel aus dem Wälzlager zu verhindern.

Aufgabe der vorliegenden Erfindung ist es somit, ein Wälzlager für ein medizinisches oder dentales, druckgasbetriebenes Handstück zu schaffen, bei dem die im Vorstehenden genannten Nachteile zumindest verringert sind. Eine Aufgabe besteht somit darin, dass die elastische Bremseinrichtung und das Wälzlager einfach und kostengünstig herstellbar sind. Eine andere Aufgabe besteht darin, die elastische Bremseinrichtung unkompliziert in dem Wälzlager befestigen zu können. Eine weitere Aufgabe ist, dass sich die Bremswirkung oder Bremskraft der elastischen Bremseinrichtung auch bei längerer Benutzung möglichst wenig verringert. Eine weitere Aufgabe besteht darin, die Befestigung der elastischen Bremseinrichtung in oder an dem Wälzlager möglichst platzsparend zu bewerkstelligen.

Diese Aufgaben werden durch ein Wälzlager mit den Merkmalen des Anspruchs 1 gelöst. Besonders vorteilhafte Ausführungsformen sind in den Unteransprüchen definiert.

Die elastische Bremseinrichtung, insbesondere zumindest eine Bremsfläche oder zumindest ein Bremselement oder zumindest ein Bremsabschnitt der Bremseinrichtung, ist durch ein Druckgas, insbesondere Druckluft, derart betätigbar oder verformbar, dass die durch den Kontakt zwischen der Bremseinrichtung und dem Wälzlager bewirkte Bremswirkung (oder Bremskraft) veränderbar ist. Die Bremsfläche oder das zumindest eine Bremselement oder der zumindest ein Bremsabschnitt ist insbesondere jener Abschnitt oder Teil der elastischen Bremseinrichtung, welcher die Bremswirkung (unmittelbar) bewirkt und/ oder welcher zumindest einen Teil des Wälzlagers kontaktiert, um damit eine Bremswirkung zu bewirken.

Die elastische Bremseinrichtung, insbesondere zumindest eine Bremsfläche oder zumindest ein Bremselement oder zumindest ein Bremsabschnitt, ist derart ausgebildet, dass, wenn die elastische Bremseinrichtung nicht mit Druckgas beaufschlagt oder versorgt wird bzw. die Versorgung mit Druckgas unterbrochen oder beendet wird, die elastische Bremseinrichtung eine erste Position, insbesondere eine Bremsposition, einnimmt, in welcher die elastische Bremseinrichtung (aufgrund des Kontaktes mit zumindest einem Teil des Wälzlagers) eine Bremswirkung oder eine erhöhte Bremswirkung ausübt. Wird die elastische Bremseinrichtung mit Druckgas beaufschlagt oder versorgt, so ist die elastische Bremseinrichtung, insbesondere zumindest eine Bremsfläche oder zumindest ein Bremselement oder zumindest ein Bremsabschnitt, in eine zweite, von der ersten Position unterschiedliche, Position bewegbar, drehbar, verschwenkbar oder verschiebbar, wobei in dieser zweiten Position das Bremselement keine Bremswirkung oder eine verringerte Bremswirkung ausübt (aufgrund eines verringerten oder völlig aufgehobenen Kontaktes mit dem zumindest einen Teil des Wälzlagers).

Das Rückstellen der elastischen Bremseinrichtung, insbesondere der zumindest einen Bremsfläche oder des zumindest einen Bremselements oder zumindest einen Bremsabschnitts, von der zweiten Position in die erste Position, erfolgt entweder selbsttätig, insbesondere aufgrund der Vorspannung der elastischen Bremseinrichtung, und/ oder durch ein Rückstellelement, insbesondere durch ein Federelement.

Das die elastische Bremseinrichtung betätigende Druckgas umfasst insbesondere zumindest einen Teilstrom eines ein Drehteil eines medizinischen oder dentalen, druckgasbetriebenen Handstücks antreibenden Druckgasstroms. Das Drehteil oder rotierbare Teil umfasst zum Beispiel ein Laufrad, ein Turbinenrad, eine Welle, eine Hohlwelle, eine Werkzeughaltevorrichtung des medizinischen oder dentalen, druckgasbetriebenen Handstücks.

Das medizinische oder dentale, druckgasbetriebene Handstück ist insbesondere derart ausgebildet, dass das die elastische Bremseinrichtung betätigende Druckgas in Richtung der Bremseinrichtung und/ oder eines Wälzlagers mit der elastischen Bremseinrichtung förderbar und/ oder lenkbar ist. Vorzugsweise sind in dem druckgasbetriebenen Handstück zumindest ein Kanal und/ oder Spalt und/ oder Durchbruch und/ oder eine Öffnung vorgesehen, durch welche(n) das die elastische Bremseinrichtung betätigende Druckgas in Richtung der elastischen Bremseinrichtung und/ oder eines Wälzlagers mit der elastischen Bremseinrichtung förderbar und/ oder lenkbar ist.

Vorzugsweise ist das Wälzlager mit der elastischen Bremseinrichtung derart ausgebildet, dass das die elastische Bremseinrichtung betätigende Druckgas in und/ oder durch das Wälzlager fließen kann, um insbesondere die elastische Bremseinrichtung betätigen zu können. Insbesondere ist ein Spalt zwischen dem äußeren Laufring und dem inneren Laufring nicht (vollständig) abgedichtet und/ oder es ist kein den Spalt (vollständig) abdichtendes Dichtelement vorgesehen, so dass das die elastische Bremseinrichtung betätigende Druckgas in und/ oder durch das Wälzlager fließen kann.

Das medizinische oder dentale, druckgasbetriebene Handstück und/ oder ein Wälzlager mit einer elastischen Bremseinrichtung ist/ sind insbesondere derart ausgebildet, dass das die elastische Bremseinrichtung betätigende Druckgas nach der Passage und/ oder Betätigung der elastischen Bremseinrichtung von der Bremseinrichtung und/ oder dem Wälzlager mit der elastischen Bremseinrichtung weg förderbar und/ oder lenkbar ist. Vorzugsweise sind in dem druckgasbetriebenen Handstück zumindest ein Kanal und/ oder Spalt und/ oder Durchbruch und/ oder eine Öffnung vorgesehen, durch welche(n) das die elastische Bremseinrichtung betätigende Druckgas von der elastischen Bremseinrichtung und/ oder dem Wälzlager weg förderbar und/ oder lenkbar ist.

Das Wälzlager und/ oder die daran vorgesehene elastische Bremseinrichtung weist das Merkmal auf, dass die elastische Bremseinrichtung an oder in dem Wälzlager, insbesondere an einem Bauteil des Wälzlagers, angeordnet ist.

Das Wälzlager und/ oder die daran vorgesehene elastische Bremseinrichtung weist! weisen das Merkmal auf, dass die elastische Bremseinrichtung an oder in dem Wälzlager, insbesondere an einem Bauteil des Wälzlagers, befestigt ist.

Das Wälzlager und/ oder die daran vorgesehene elastische Bremseinrichtung weist! weisen das Merkmal auf, dass zumindest ein Teil der elastischen Bremseinrichtung an oder in dem Wälzlager beweglich oder verschiebbar angeordnet und/ oder relativ zu zumindest einem Teil des Wälzlagers beweglich oder verschiebbar ist.

Das Wälzlager und/ oder die daran vorgesehene elastische Bremseinrichtung weist! weisen das Merkmal auf, dass eine Bremsfläche der Bremseinrichtung relativ zu zumindest einem Teil des Wälzlagers beweglich ausgebildet ist.

Das Wälzlager und/ oder die daran vorgesehene elastische Bremseinrichtung weist! weisen das Merkmal auf, dass zumindest ein Teil der elastischen Bremseinrichtung, insbesondere zumindest ein Verbindungsabschnitt der Bremseinrichtung zum Verbinden oder Befestigen der elastischen Bremseinrichtung mit/ an dem Wälzlager, relativ zu zumindest einem Teil des Wälzlagers unbeweglich angeordnet ist.

Das Wälzlager und/ oder die daran vorgesehene elastische Bremseinrichtung weist! weisen das Merkmal auf, dass die elastische Bremseinrichtung an dem Wälzlager lösbar angeordnet oder befestigt ist.

Das Wälzlager und/ oder die daran vorgesehene elastische Bremseinrichtung weist! weisen das Merkmal auf, dass die elastische Bremseinrichtung formschlüssig an oder in dem Wälzlager angeordnet oder befestigt ist.

Das Wälzlager und/ oder die daran vorgesehene elastische Bremseinrichtung weist! weisen das Merkmal auf, dass die elastische Bremseinrichtung an oder in einer, insbesondere ringförmigen, Aufnahme des Wälzlagers, insbesondere eines Bauteils des Wälzlagers, angeordnet oder befestigt ist; die Aufnahme umfasst zum Beispiel einen Rücksprung, einen Einstich, eine Nut, einen Kanal oder ähnliche geometrische Ausgestaltungen.

Das Wälzlager und/ oder die daran vorgesehene elastische Bremseinrichtung weist! weisen das Merkmal auf, dass die Aufnahme des Wälzlagers für die elastische Bremseinrichtung an einer Innenseite des äußeren Laufrings vorgesehen ist; die Innenseite des äußeren Laufrings ist vorzugsweise jene Seite des äußeren Laufrings, welche der zumindest eine Rollkörper kontaktiert und/ oder an der eine Laufbahn für den zumindest einen Rollkörper vorgesehen ist.

Das Wälzlager und/ oder die daran vorgesehene elastische Bremseinrichtung weist! weisen das Merkmal auf, dass die elastische Bremseinrichtung formschlüssig, insbesondere durch Einschnappen oder Einrasten, in der Aufnahme des Wälzlagers angeordnet oder befestigt ist.

Das Wälzlager und/ oder die daran vorgesehene elastische Bremseinrichtung weist! weisen vorzugsweise das Merkmal auf, dass die elastische Bremseinrichtung, insbesondere zumindest ein Verbindungsabschnitt der Bremseinrichtung zum Verbinden oder Befestigen der elastischen Bremseinrichtung mit/ an dem Wälzlager, ein Rastelement zum Einschnappen oder Einrasten in der Aufnahme des Wälzlagers aufweist.

Das Wälzlager und/ oder die daran vorgesehene elastische Bremseinrichtung weist! weisen vorzugsweise das Merkmal auf, dass die elastische Bremseinrichtung, insbesondere der zumindest eine Verbindungsabschnitt der Bremseinrichtung, ohne zusätzliches, separates Befestigungselement in der Aufnahme befestigbar ist.

Das Wälzlager und/ oder die daran vorgesehene elastische Bremseinrichtung weist! weisen vorzugsweise das Merkmal auf, dass die elastische Bremseinrichtung, insbesondere der zumindest eine Verbindungsabschnitt der Bremseinrichtung, durch ein zusätzliches Befestigungselement oder Sicherungselement, zum Beispiel einen Federring, einen Sprengring, ein Halteelement, ein Federelement, in der Aufnahme befestigbar ist.

Das Wälzlager und/ oder die daran vorgesehene elastische Bremseinrichtung weist! weisen vorzugsweise das Merkmal auf, dass das zusätzliche Befestigungselement oder Sicherungselement als separates, von der elastischen Bremseinrichtung lösbares Element ausgebildet ist.

Das Wälzlager und/ oder die daran vorgesehene elastische Bremseinrichtung weist! weisen vorzugsweise das Merkmal auf, dass das zusätzliche Befestigungselement oder Sicherungselement unlösbar mit der elastischen Bremseinrichtung, insbesondere einem Bauteil der elastischen Bremseinrichtung, zum Beispiel der Bremsfläche, verbunden ist.

Das Wälzlager und/ oder die daran vorgesehene elastische Bremseinrichtung weist! weisen vorzugsweise das Merkmal auf, dass das zusätzliche Befestigungselement oder Sicherungselement, insbesondere gemeinsam mit der elastischen Bremseinrichtung, in der Aufnahme des Wälzlagers für die elastische Bremseinrichtung aufnehmbar oder angeordnet ist.

Das Wälzlager und/ oder die daran vorgesehene elastische Bremseinrichtung weist! weisen vorzugsweise das Merkmal auf, dass das zusätzliche Befestigungselement oder Sicherungselement formschlüssig, insbesondere durch Einschnappen oder Einrasten, in der Aufnahme des Wälzlagers angeordnet oder befestigbar ist.

Das Wälzlager und/ oder die daran vorgesehene elastische Bremseinrichtung weist! weisen vorzugsweise das Merkmal auf, dass die elastische Bremseinrichtung mehrteilig ausgebildet oder aufgebaut ist.

Das Wälzlager und/ oder die daran vorgesehene elastische Bremseinrichtung weist! weisen vorzugsweise das Merkmal auf, dass die elastische Bremseinrichtung durch mehrere Bauteile gebildet ist, die insbesondere lösbar oder unlösbar miteinander verbunden sind.

Das Wälzlager und/ oder die daran vorgesehene elastische Bremseinrichtung weist! weisen vorzugsweise das Merkmal auf, dass die elastische Bremseinrichtung durch mehrere Bauteile gebildet ist, die unterschiedliche Materialien aufweisen, zum Beispiel ein erstes Bauteil aus Kunststoff und ein zweites Bauteil aus Metall.

Das Wälzlager und/ oder die daran vorgesehene elastische Bremseinrichtung weist! weisen vorzugsweise das Merkmal auf, dass die elastische Bremseinrichtung mehrteilig ausgebildet ist und ein Bremselement und das Befestigungselement oder Sicherungselement umfasst.

Das Wälzlager und/ oder die daran vorgesehene elastische Bremseinrichtung weist! weisen vorzugsweise das Merkmal auf, dass die elastische Bremseinrichtung mehrteilig ausgebildet ist und ein Bremselement und ein Stütz- oder Versteifungselement umfasst, das insbesondere aus Metall besteht; das Stütz- oder Versteifungselement ist vorzugsweise im Inneren der elastischen Bremseinrichtung oder des Bremselements angeordnet und/ oder vollständig von Kunststoff oder Gummi umgeben; das metallische Stütz- oder Versteifungselement und das Bremselement sind insbesondere unlösbar miteinander verbunden, zum Beispiel durch Verspritzen, Vergießen, Verkleben oder Vulkanisieren.

Das Wälzlager und/ oder die daran vorgesehene elastische Bremseinrichtung weist! weisen vorzugsweise das Merkmal auf, dass die elastische Bremseinrichtung mehrteilig ausgebildet ist und zum Beispiel ein Bremselement und ein Federelement umfasst, insbesondere eine Wellfeder oder einen Federring; das Federelement ist insbesondere dazu vorgesehen, das Bremselement in eine erste Position, insbesondere in eine Bremsposition, in welcher das Bremselement eine Bremswirkung oder eine erhöhte Bremswirkung ausübt, vorzuspannen; die elastische Bremseinrichtung ist insbesondere derart ausgebildet, dass durch das die elastische Bremseinrichtung betätigende Druckgas das Bremselement entgegen der Federkraft des Federelements in eine zweite, von der ersten Position unterschiedliche, Position bewegbar oder verschiebbar ist, wobei in dieser zweiten Position das Bremselement keine Bremswirkung oder eine verringerte Bremswirkung ausübt; das Federelement ist insbesondere dazu ausgebildet, mit und/ oder nach Beendigung des Zustroms des die elastische Bremseinrichtung betätigenden Druckgases das Bremselement in die erste Position, insbesondere in die Bremsposition, zu bewegen.

Das Wälzlager und/ oder die daran vorgesehene elastische Bremseinrichtung weist! weisen vorzugsweise das Merkmal auf, dass das Bremselement zur Bewegung von der ersten in die zweite Position und vice versa verschiebbar und/ oder gleitend in der Aufnahme des Wälzlagers für die elastische Bremseinrichtung angeordnet ist; vorzugsweise ist das Bremselement zur Bewegung von der ersten in die zweite Position und vice versa in der Aufnahme des Wälzlagers für die elastische Bremseinrichtung geführt; vorzugsweise ist das Bremselement zur Bewegung von der ersten in die zweite Position im Wesentlichen entlang und/ oder parallel zu einer Drehachse oder Mittelachse des Wälzlagers bewegbar/ verschiebbar.

Das Wälzlager und/ oder die daran vorgesehene elastische Bremseinrichtung weist! weisen das Merkmal auf, dass das Bremselement und/ oder der Bremsabschnitt und/ oder die Bremsfläche der elastischen Bremseinrichtung durch das Druckgas verformbar sind.

Das Wälzlager und/ oder die daran vorgesehene elastische Bremseinrichtung weist! weisen vorzugsweise das Merkmal auf, dass die elastische Bremseinrichtung, insbesondere das Bremselement und/ oder der Bremsabschnitt und/ oder die Bremsfläche, flach und/ oder scheibenförmig geformt ist.

Das Wälzlager und/ oder die daran vorgesehene elastische Bremseinrichtung weist! weisen das Merkmal auf, dass die elastische Bremseinrichtung, insbesondere das Bremselement und/ oder der Bremsabschnitt und/ oder die Bremsfläche, ringförmig geformt ist.

Das Wälzlager und/ oder die daran vorgesehene elastische Bremseinrichtung weist! weisen das Merkmal auf, dass die elastische Bremseinrichtung, insbesondere das Bremselement und/ oder der Bremsabschnitt und/ oder die Bremsfläche, eine/n, vorzugsweise mittig angeordnete/n Durchbruch oder Öffnung aufweist; vorzugsweise ist durch den Durchbruch eine Innenkante oder Innenfläche an der elastischen Bremseinrichtung gebildet, die einen Teil des Wälzlagers und/ oder des Bauteils, insbesondere Drehteils, zwecks Erzeugung der Bremswirkung kontaktiert und/ oder die als Bremsfläche oder Bremsabschnitt wirkt.

Das Wälzlager und/ oder die daran vorgesehene elastische Bremseinrichtung weist! weisen vorzugsweise das Merkmal auf, dass die elastische Bremseinrichtung, insbesondere das Bremselement und/ oder der Bremsabschnitt und/ oder die Bremsfläche, Kunststoff umfasst, zum Beispiel einen thermoplastischen Kunststoff oder einen Fluor-hältigen Kunststoff, zum Beispiel PTFE.

Das Wälzlager und/ oder die daran vorgesehene elastische Bremseinrichtung weist! weisen vorzugsweise das Merkmal auf, dass die elastische Bremseinrichtung, insbesondere das Bremselement und/ oder der Bremsabschnitt und/ oder die Bremsfläche, Gummi umfasst, zum Beispiel einen Fluor-hältigen Gummi, oder Silikon.

Das Wälzlager und/ oder die daran vorgesehene elastische Bremseinrichtung weist! weisen vorzugsweise das Merkmal auf, dass die elastische Bremseinrichtung, insbesondere das Bremselement und/ oder der Bremsabschnitt und/ oder die Bremsfläche, ein keramisches Material umfasst.

Das Wälzlager und/ oder die daran vorgesehene elastische Bremseinrichtung weist! weisen vorzugsweise das Merkmal auf, dass der Kunststoff oder der Gummi oder das keramische Material auf einer Trägerkomponente der elastischen Bremseinrichtung und/ oder auf dem Verbindungsabschnitt der Bremseinrichtung vorgesehen oder abgeschieden oder (lösbar oder unlösbar) befestigt sind.

Das Wälzlager und/ oder die daran vorgesehene elastische Bremseinrichtung weist! weisen vorzugsweise das Merkmal auf, dass die elastische Bremseinrichtung durch ein einziges oder integrales Bauteil gebildet ist, das insbesondere aus Kunststoff oder Gummi hergestellt ist; das einzige oder integrale Bauteil umfasst insbesondere einen Verbindungsabschnitt zum Verbinden oder Befestigen der elastischen Bremseinrichtung mit/ an dem Wälzlager und eine Bremsfläche oder einen Bremsabschnitt.

Das Wälzlager und/ oder die daran vorgesehene elastische Bremseinrichtung weist! weisen vorzugsweise das Merkmal auf, dass die Höhe oder Dicke des Verbindungsabschnitts der elastischen Bremseinrichtung größer ist als die Höhe oder Dicke des Bremselements oder der Bremsfläche oder eines Bremsabschnittes der elastischen Bremseinrichtung.

Das Wälzlager und/ oder die daran vorgesehene elastische Bremseinrichtung weist! weisen vorzugsweise das Merkmal auf, dass das Bremselement oder die Bremsfläche oder der Bremsabschnitt der elastischen Bremseinrichtung durch das die elastische Bremseinrichtung betätigende Druckgas relativ zu dem Verbindungsabschnitt bewegbar sind.

Das Wälzlager und/ oder die daran vorgesehene elastische Bremseinrichtung weist! weisen vorzugsweise das Merkmal auf, dass zumindest ein Teil des Verbindungsabschnitts im Wesentlichen durch das die elastische Bremseinrichtung betätigende Druckgas nicht bewegbar und/ oder unbewegbar in der Aufnahme des Wälzlagers für die elastische Bremseinrichtung befestigt ist.

Das Wälzlager und/ oder die daran vorgesehene elastische Bremseinrichtung weist! weisen vorzugsweise das Merkmal auf, dass die elastische Bremseinrichtung, insbesondere das Bremselement oder der Bremsabschnitt oder die Bremsfläche, den Spalt zwischen dem äußeren Laufring und dem inneren Laufring (in dem insbesondere der zumindest einen Rollkörper und/ oder ein Käfig, in dem der zumindest eine Rollkörper aufgenommen ist) vollständig bedeckt, insbesondere wenn der elastischen Bremseinrichtung kein die elastische Bremseinrichtung betätigendes Druckgas zugeführt wird.

Das Wälzlager und/ oder die daran vorgesehene elastische Bremseinrichtung weist! weisen das Merkmal auf, dass die elastische Bremseinrichtung, insbesondere das Bremselement oder der Bremsabschnitt oder die Bremsfläche, sich von dem äußeren Laufring, an dem die elastische Bremseinrichtung vorgesehen und/ oder befestigt und/ oder angeordnet ist, derart zu dem inneren Laufring erstreckt, dass die elastische Bremseinrichtung, insbesondere das Bremselement oder der Bremsabschnitt oder die Bremsfläche, den inneren Laufring kontaktiert, insbesondere wenn der elastischen Bremseinrichtung kein die elastische Bremseinrichtung betätigendes Druckgas zugeführt wird.

Das Wälzlager und/ oder die daran vorgesehene elastische Bremseinrichtung weist! weisen das Merkmal auf, dass die elastische Bremseinrichtung, insbesondere das Bremselement oder der Bremsabschnitt oder die Bremsfläche, zum Abbremsen der Drehbewegung des Wälzlagers und/ oder eines mit dem Wälzlager verbundenen Bauteils und/ oder zum Erzeugen der Bremswirkung zumindest einen Kontaktbereich kontaktiert.

Das Wälzlager und/ oder die daran vorgesehene elastische Bremseinrichtung weist! weisen das Merkmal auf, dass der zumindest eine Kontaktbereich an dem die elastische Bremseinrichtung aufweisenden Wälzlager vorgesehen ist.

Das Wälzlager und/ oder die daran vorgesehene elastische Bremseinrichtung weist! weisen das Merkmal auf, dass der zumindest eine Kontaktbereich an dem inneren Laufring des Wälzlagers vorgesehen ist und die elastische Bremseinrichtung, insbesondere das Bremselement oder der Bremsabschnitt oder die Bremsfläche, an dem äußeren Laufring befestigt oder gleitend/beweglich geführt ist.

Der zumindest eine Kontaktbereich ist erfindungsgemäß an der Stirnseite des inneren Laufrings vorgesehen.

Das Wälzlager und/ oder die daran vorgesehene elastische Bremseinrichtung weist! weisen vorzugsweise das Merkmal auf, dass der zumindest eine Kontaktbereich an einem, insbesondere durch das Druckgas direkt oder indirekt in Drehung versetzbaren, (nicht das Wälzlager umfassenden) Bauteil des medizinischen oder dentalen, druckgasbetriebenen Handstücks vorgesehen ist.

Das Wälzlager und/ oder die daran vorgesehene elastische Bremseinrichtung weist! weisen vorzugsweise das Merkmal auf, dass der zumindest eine Kontaktbereich an einem durch das Wälzlager, an dem die elastische Bremseinrichtung vorgesehen ist, gelagerten Drehteil des medizinischen oder dentalen, druckgasbetriebenen Handstücks vorgesehen ist; das Drehteil oder rotierbare Teil umfasst zum Beispiel eine Hohlwelle, zumindest einen Teil einer Werkzeughaltevorrichtung oder zumindest einen Teil des Laufrads des medizinischen oder dentalen, druckgasbetriebenen Handstücks; der zumindest eine Kontaktbereich umfasst eine Oberfläche, insbesondere äußere Oberfläche, des Drehteils oder ist dadurch gebildet.

Das Wälzlager und/ oder die daran vorgesehene elastische Bremseinrichtung weist! weisen vorzugsweise das Merkmal auf, dass der zumindest eine Kontaktbereich eine einzige oder mehrere Kontaktflächen umfasst, an der / denen der (unmittelbare) Kontakt zwischen der elastischen Bremseinrichtung, insbesondere dem Bremselement oder dem Bremsabschnitt oder zumindest einer Bremsfläche, zum Erzeugen der Bremswirkung erfolgt; das Vorsehen mehrerer Kontaktflächen vergrößert in vorteilhafter Weise die Brems- oder Reibungsfläche und bewirkt somit eine Erhöhung der Bremswirkung oder ein schnelleres Abbremsen.

Das Wälzlager und/ oder die daran vorgesehene elastische Bremseinrichtung weist! weisen vorzugsweise das Merkmal auf, dass die zumindest eine Kontaktfläche gerade oder gebogen geformt ist.

Das Wälzlager und/ oder die daran vorgesehene elastische Bremseinrichtung weist! weisen das Merkmal auf, dass die zumindest eine Kontaktfläche gewinkelt und/ oder schräg und/ oder versetzt zur Längsachse oder Drehachse des Wälzlagers angeordnet ausgebildet ist.

Das Wälzlager und/ oder die daran vorgesehene elastische Bremseinrichtung weist! weisen das Merkmal auf, dass der zumindest eine Kontaktbereich mehrere, gewinkelt oder versetzt zueinander angeordnete, Kontaktflächen umfasst.

Das Wälzlager und/ oder die daran vorgesehene elastische Bremseinrichtung weist! weisen vorzugsweise das Merkmal auf, dass die elastische Bremseinrichtung, insbesondere das Bremselement oder der Bremsabschnitt, eine Bremsfläche umfasst.

Das Wälzlager und/ oder die daran vorgesehene elastische Bremseinrichtung weist! weisen vorzugsweise das Merkmal auf, dass die zumindest eine Bremsfläche gerade oder gebogen ausgebildet ist.

Das Wälzlager und/ oder die daran vorgesehene elastische Bremseinrichtung weist! weisen vorzugsweise das Merkmal auf, dass die elastische Bremseinrichtung, insbesondere das Bremselement oder der Bremsabschnitt, mehrere Bremsflächen umfasst, die gewinkelt oder versetzt zueinander angeordnet sind; die mehreren Bremsflächen sind zum Beispiel durch eine Stufe oder eine Schulter gebildet; das Vorsehen mehrerer Bremsflächen verändert oder vergrößert in vorteilhafter Weise die Reibungsfläche und bewirkt somit eine Erhöhung der Bremswirkung oder ein schnelleres Abbremsen.

Das Wälzlager und/ oder die daran vorgesehene elastische Bremseinrichtung weist! weisen vorzugsweise das Merkmal auf, dass die mehreren Bremsflächen durch eine Kante oder ein Eck miteinander verbunden oder voneinander getrennt sind.

Das Wälzlager und/ oder die daran vorgesehene elastische Bremseinrichtung weist! weisen vorzugsweise das Merkmal auf, dass die mehreren Bremsflächen angrenzend aneinander angeordnet sind.

Das Wälzlager und/ oder die daran vorgesehene elastische Bremseinrichtung weist! weisen vorzugsweise das Merkmal auf, dass die zumindest eine Bremsfläche angrenzend an den Durchbruch in der elastischen Bremseinrichtung, insbesondere in dem Bremselement und/ oder dem Bremsabschnitt, angeordnet ist.

Das Wälzlager und/ oder die daran vorgesehene elastische Bremseinrichtung weist! weisen vorzugsweise das Merkmal auf, dass die zumindest eine Bremsfläche zumindest einen Abschnitt einer Außenfläche der elastischen Bremseinrichtung, insbesondere des Bremselements oder des Bremsabschnitts umfasst.

Das Wälzlager und/ oder die daran vorgesehene elastische Bremseinrichtung weist! weisen vorzugsweise das Merkmal auf, dass die zumindest eine Bremsfläche zumindest einen Teil einer durch den Durchbruch oder die Öffnung in der elastischen Bremseinrichtung, insbesondere in dem Bremselement und/ oder dem Bremsabschnitt, geformten inneren Mantelfläche umfasst oder durch diese gebildet ist.

Das Wälzlager und/ oder die daran vorgesehene elastische Bremseinrichtung weist! weisen vorzugsweise das Merkmal auf, dass die zumindest eine Bremsfläche zumindest einen Abschnitt einer Oberseite oder Unterseite eines scheiben- oder ringförmig ausgebildeten Bremselements oder Bremsabschnitts umfasst oder durch diesen gebildet ist; die Oberseite und Unterseite des scheiben- oder ringförmigen Bremselements oder Bremsabschnitts sind durch eine (äußere und innere) Mantelfläche miteinander verbunden, wobei besonders bevorzugt eine zweite Bremsfläche zumindest einen Abschnitt der (äußeren oder inneren) Mantelfläche umfasst.

Das Wälzlager und/ oder die daran vorgesehene elastische Bremseinrichtung weist! weisen vorzugsweise das Merkmal auf, dass mehrere Bremsflächen und mehrere Kontaktflächen vorgesehen sind, wobei jeder Bremsfläche eine Kontaktfläche zugeordnet ist und/ oder jeweils eine Bremsfläche eine (die ihr zugeordnete) Kontaktfläche kontaktiert; das Vorsehen mehrerer Bremsflächen und mehrerer Kontaktflächen bewirkt in vorteilhafter Weise eine Erhöhung der Bremswirkung oder ein schnelleres Abbremsen; vorzugsweise weisen die einander zugeordnete Bremsfläche und Kontaktfläche jeweils dieselbe Orientierung (zum Beispiel in Bezug auf die Längs- oder Drehachse des Wälzlagers) und/ oder Form auf; vorzugsweise weisen unterschiedliche Brems- und Kontaktflächenpaare unterschiedliche Orientierungen und/ oder Formen und/ oder Flächen(abmessungen) auf.

Erfindungsgemäß weisen der äußere Laufring und der innere Laufring unterschiedliche Längen oder Höhen auf; erfindungsgemäß weist der äußere Laufring eine größere Höhe als der innere Laufring auf; der Laufring mit der größeren Höhe weist somit gegenüber dem anderen Laufring (mit der geringeren Höhe) einen Überstand auf.

Das Wälzlager und/ oder die daran vorgesehene elastische Bremseinrichtung weist! weisen vorzugsweise das Merkmal auf, dass an dem Überstand zumindest ein Teil der elastischen Bremseinrichtungen und/ oder der Aufnahme für die elastischen Bremseinrichtungen vorgesehen und/ oder befestigt und/ oder (beweglich, gleitend oder verschiebbar) geführt ist; dies ist von Vorteil, wenn der zumindest eine Kontaktbereich oder die zumindest eine Kontaktfläche an der Stirnfläche des inneren Laufrings und gegebenenfalls zusätzlich an einem mit dem Wälzlager verbundenen Bauteil, insbesondere Drehteil, vorgesehen ist.

Das Wälzlager und/ oder die daran vorgesehene elastische Bremseinrichtung weist! weisen vorzugsweise das Merkmal auf, dass mehrere, zum Beispiel zwei, elastische Bremseinrichtungen an einem einzigen Wälzlager vorgesehen sind, insbesondere an gegenüberliegenden Enden des einzigen Wälzlagers; damit wird in vorteilhafter Weise die Bremswirkung vergrößert und eine erhöhte Bremswirkung oder ein schnelleres Abbremsen erreicht; vorzugsweise ist der zumindest eine Rollkörper zwischen den mehreren elastischen Bremseinrichtungen angeordnet.

Das Wälzlager und/ oder die daran vorgesehene elastische Bremseinrichtung weist! weisen vorzugsweise das Merkmal auf, dass das Wälzlager als Kugellager ausgebildet ist, wobei insbesondere der zumindest eine Rollkörper als Kugel ausgebildet ist.

Gemäß einem Ausführungsbeispiel umfasst das medizinische oder dentale, druckgasbetriebene Handstück mehrere, zum Beispiel zwei, Wälzlager mit jeweils zumindest einer elastischen Bremseinrichtung. Vorzugsweise lagern die mehreren Wälzlager dasselbe Drehteil oder rotierbare Teil und üben ihre Bremswirkung direkt oder indirekt, insbesondere gleichzeitig, auf dieses Drehteil aus.

Das Wälzlager für ein medizinisches oder dentales, druckgasbetriebenes Handstück umfasst: einen äußeren Laufring, einen inneren Laufring, zumindest einen Rollkörper, der zwischen dem äußeren Laufring und dem inneren Laufring angeordnet ist, und eine am Wälzlager vorgesehene, elastische Bremseinrichtung, die kontaktierend auf das Wälzlager und/ oder ein mit dem Wälzlager verbundenes Bauteil, insbesondere Drehteil oder rotierbare Teil, einwirkt, um eine Drehbewegung des Wälzlagers und/ oder des mit dem Wälzlager verbundenen Bauteils abzubremsen, wobei die elastische Bremseinrichtung, insbesondere zumindest ein Bremsabschnitt der Bremseinrichtung, durch Druckgas derart betätigbar ist, dass die durch den Kontakt zwischen der elastischen Bremseinrichtung und dem Wälzlager und/ oder dem mit dem Wälzlager verbundenen Bauteil bewirkte Bremswirkung veränderbar ist.

Die elastische Bremseinrichtung ist ringförmig mit einer zentralen Öffnung ausgebildet und umfasst einen Außenumfang, einen die zentrale Öffnung begrenzenden oder definierenden Innenumfang und einen Bremsabschnitt zum Abbremsen der Drehbewegung des Wälzlagers und/ oder des mit dem Wälzlager verbundenen Bauteils. An dem Außenumfang ist ein Verbindungsabschnitt zum Befestigen der elastischen Bremseinrichtung an dem Wälzlager vorgesehen. Die zentrale Öffnung weist einen Innendurchmesser auf.

Im Folgenden sind besonders bevorzugte Ausführungsbeispiele von Wälzlagern, insbesondere des im Vorstehenden beschriebenen Wälzlagers, mit jeweils zumindest einer elastischen Bremseinrichtung beschrieben. Die beschriebenen Wälzlager und/ oder elastischen Bremseinrichtungen weisen mehrere der im Vorstehenden genannten Merkmale auf.

Gemäß einem Ausführungsbeispiel ist ein Wälzlager vorgesehen, bei dem die gesamte elastische Bremseinrichtung einschließlich des Verbindungsabschnitts aus einem Elastomer oder elastomeren Material gebildet ist. Bevorzugt ist die elastische Bremseinrichtung einschließlich des Verbindungsabschnitts aus einem einzigen Elastomer oder elastomeren Material gebildet. Dies vereinfacht und vergünstigt in erheblichem Maße sowohl die Herstellung der elastischen Bremseinrichtung als auch die Montage der elastischen Bremseinrichtung in oder an dem Wälzlager, da die gesamte elastische Bremseinrichtung ohne weitere Befestigungselemente, wie zum Beispiel Stützringe oder Federelemente, an dem Wälzlager befestigbar ist.

Gemäß einem Ausführungsbeispiel ist ein Wälzlager vorgesehen, bei dem die gesamte elastische Bremseinrichtung aus Elastomer, insbesondere aus einem einzigen Elastomer oder elastomeren Material gebildet und zumindest an einem Abschnitt mit einem Beschichtungsmaterial beschichtet ist. In vorteilhafter Weise ist durch das Beschichtungsmaterial die mechanische Beständigkeit oder Abriebfestigkeit zumindest eines Abschnitts oder der gesamten elastischen Bremseinrichtung, insbesondere des Elastomers, erhöht, vorzugsweise auch die Beständigkeit während einer Reinigung oder Sterilisation.

Gemäß einem Ausführungsbeispiel ist ein Wälzlager vorgesehen, bei dem die gesamte elastische Bremseinrichtung aus Elastomer, insbesondere aus einem einzigen Elastomer oder elastomeren Material gebildet ist, wobei zum Befestigen der elastischen Bremseinrichtung an dem Wälzlager der ausschließlich aus Elastomer gebildete Verbindungsabschnitt in der Aufnahme des äußeren Laufrings oder des inneren Laufrings aufgenommen ist. Damit ist in vorteilhafter Weise eine schnelle, einfache und platzsparende Montage der elastischen Bremseinrichtung an dem Wälzlager, insbesondere in der dafür vorgesehenen Aufnahme möglich.

Gemäß einem Ausführungsbeispiel ist ein Wälzlager vorgesehen, bei dem die elastische Bremseinrichtung durch den Einbau in das Wälzlager derart deformiert ist, dass zumindest ein Teil der elastischen Bremseinrichtung, insbesondere ein Körperabschnitt, der den Verbindungsabschnitt mit dem Bremsabschnitt verbindet, und/ oder der Bremsabschnitt, gebogen ist und insbesondere von dem zumindest einen Rollkörper wegweist. Ein Vorteil dieses Ausführungsbeispiels liegt darin, dass die Form der elastischen Bremseinrichtung vor dem Einbau in dem Wälzlager sehr einfach gestaltet sein kann, zum Beispiel scheibenförmig und/ oder im Wesentlichen flach. Demgemäß kann diese scheibenförmige und/ oder im Wesentlichen flache Bremseinrichtung kostengünstig durch Stanzen oder Spritzguss hergestellt werden.

Ein weiterer Vorteil einer durch den Einbau deformierten elastischen Bremseinrichtung liegt darin, dass, insbesondere wenn die Bremseinrichtung in eine gebogene oder schräge Form deformiert wird, auch bei Verschleiß der elastischen Bremseinrichtung aufgrund der durch die Deformierung erzeugten Vorspannung der Kontakt zwischen der elastischen Bremseinrichtung, insbesondere dem Bremsabschnitt, und dem Kontaktbereich bestehen bleibt, so dass trotz des Verschleißes eine ausreichende Bremswirkung oder Bremskraft erhalten bleibt.

Gemäß einem Ausführungsbeispiel ist ein Wälzlager vorgesehen, bei dem der Bremsabschnitt, insbesondere eine Kante des Bremsabschnitts oder am Bremsabschnitt, der elastischen Bremseinrichtung zum Abbremsen der Drehbewegung einen Kontaktbereich an dem inneren Laufring oder an einem mit dem Wälzlager verbundenen Bauteil kontaktiert, wobei der Kontaktbereich gewinkelt oder schräg zu einer Drehachse des Wälzlagers angeordnet oder konusförmig ausgebildet ist. Der Winkel ist vorzugsweise größer 0° und kleiner 90°. Der Winkel liegt vorzugsweise zwischen 3° und 80°, insbesondere zwischen 5° und 60°. Ein Vorteil dieser Ausführungsform liegt ebenfalls darin, dass bei Verschleiß der elastischen Bremseinrichtung der Kontakt zwischen der elastischen Bremseinrichtung, insbesondere dem Bremsabschnitt, und dem gewinkelten, d.h. sich der Aufnahme für den Verbindungsabschnitt radial annähernden, Kontaktbereich bestehen bleibt, so dass trotz des Verschleißes eine ausreichende Bremswirkung oder Bremskraft erhalten bleibt. Ein weiterer Vorteil des schräg angeordneten Kontaktbereichs besteht in der dadurch vergrößerten Fertigungstoleranz.

Gemäß einem Ausführungsbeispiel ist ein Verfahren zur Herstellung eines Wälzlagers, insbesondere eines im Vorstehenden beschriebenen Wälzlagers vorgesehen, bei dem die elastische Bremseinrichtung derart an dem Wälzlager befestigt wird, dass die elastische Bremseinrichtung durch den Einbau in das Wälzlager deformiert wird, so dass zumindest ein Teil der elastischen Bremseinrichtung, insbesondere ein Körperabschnitt, der den Verbindungsabschnitt mit dem Bremsabschnitt verbindet, und/ oder der Bremsabschnitt, gebogen ist und insbesondere von dem zumindest einen Rollkörper wegweist. Vorzugsweise wird die elastische Bremseinrichtung in das fertig montierte (funktionsfähige) Wälzlager eingebaut, insbesondere wird der Verbindungsabschnitt in die Aufnahme eingefügt.

Vorzugsweise umfasst das Elastomer oder elastomere Material natürliche oder synthetische Elastomere. Vorzugsweise umfasst das Elastomer oder elastomere Material ein fluoriertes Elastomer (FKM, FFKM), Fluorkautschuk, Gummi, einen Fluor-hältigen Gummi, Silikon oder ein Fluor-hältiges Silikon.

Vorzugsweise ist, insbesondere weil die gesamte elastische Bremseinrichtung einschließlich des Verbindungsabschnitts aus einem (einzigen) Elastomer oder elastomeren Material gebildet ist, die gesamte elastische Bremseinrichtung oder sind alle Abschnitte davon elastisch verformbar. Besonders bevorzugt sind unterschiedliche Abschnitte der elastischen Bremseinrichtung in unterschiedliche Richtungen verformbar. Damit kann die elastische Bremseinrichtung in vorteilhafter Weise unterschiedliche Aufgaben, zum Beispiel die Befestigung am Wälzlager und die für die Bremsfunktion notwendige Bewegung zwischen unterschiedlichen Positionen, durchführen, ohne dass dafür zusätzliche Elemente oder Hilfsmittel notwendig wären.

Vorzugsweise ist die gesamte Außenfläche der elastischen Bremseinrichtung mit einem Beschichtungsmaterial beschichtet. Alternativ ist zumindest einer oder sind mehrere oder alle der folgenden Abschnitte der elastischen Bremseinrichtung mit einem Beschichtungsmaterial beschichtet: der Verbindungsabschnitt; der zumindest eine Bremsabschnitt; die innere Mantelfläche an Innenumfang; die äußere Mantelfläche an Außenumfang; eine Oberseite und/ oder Unterseite einer flach, scheiben- oder ringförmig ausgebildeten elastischen Bremseinrichtung; zumindest eine Kante der elastischen Bremseinrichtung.

Vorzugsweise umfasst das Beschichtungsmaterial einen Kunststoff, zum Beispiel einen thermoplastischen Kunststoff, insbesondere einen fluorhältigen thermoplastischen Kunststoff. Zum Beispiel umfasst das Beschichtungsmaterial ein Polyhalogenolefin, insbesondere Polytetrafluorethylen (PTFE). Ein Vorteil der genannten Kunststoffe besteht darin, dass diese sowohl das elastomere Grundmaterial der elastischen Bremseinrichtung schützen, insbesondere vor den während einer Reinigung oder Sterilisation herrschenden Bedingungen, als auch ausreichend verformbar sind, so dass sie mit dem elastomeren Grundmaterial deformierbar sind, während des Einbaus der elastischen Bremseinrichtung in das Wälzlager und/ oder während der im Vorstehenden beschriebenen Bremstätigkeit, d.h. bei der Bewegung zwischen der ersten Position und der davon unterschiedlichen zweiten Position.

Vorzugsweise ist die Aufnahme ringförmig ausgebildet, zum Beispiel als ringförmiger Rücksprung oder Einstich oder als ringförmige Nut oder Schulter an dem äußeren Laufring oder an dem inneren Laufring. Die Aufnahme ist an der Innenseite des äußeren Laufrings vorgesehen. Vorzugsweise umfasst die Aufnahme eine Rückwand, die sich im Wesentlichen axial (bezogen auf die Drehachse des Wälzlagers) erstreckt, insbesondere im Wesentlichen parallel zur Drehachse des Wälzlagers. Vorzugsweise umfasst die Aufnahme eine erste Seitenwand und eine zweite Seitenwand, die sich im Wesentlichen radial (bezogen auf die Drehachse des Wälzlagers) erstrecken. Insbesondere sind die Seitenwände im Wesentlichen orthogonal zur Drehachse des Wälzlagers angeordnet. Vorzugsweise verbindet die Rückwand die zwei Seitenwände miteinander. Vorzugsweise sind die Seitenwände im Wesentlichen parallel zueinander angeordnet und/ oder im Wesentlichen gleich lang (von der Rückwand gemessen). Damit ist in vorteilhafter Weise ein sicherer Halt der elastischen Bremseinrichtung in der Aufnahme gewährleistet.

Vorzugsweise ist zum Befestigen der elastischen Bremseinrichtung an dem Wälzlager ausschließlich der aus Elastomer gebildete Verbindungsabschnitt in der Aufnahme aufgenommen. Insbesondere ist keine zusätzliche Stützscheibe, kein zusätzlicher Federring oder zusätzliches Versteifungselement oder generell kein zusätzliches separates (mechanisches) Element zur Fixierung des Verbindungsabschnitts in der Aufnahme vorgesehen. Derartige Elemente sind insbesondere weder in der Aufnahme noch außerhalb der Aufnahme zum Befestigen der elastischen Bremseinrichtung an dem Wälzlager notwendig. Vorzugsweise ist im Verbindungsabschnitt auch kein von der Bremseinrichtung lösbares Teil und/ oder nicht aus Elastomer bestehendes Teil aufgenommen oder eingeschlossen. Damit ist in vorteilhafter Weise die Herstellung und Montage der elastischen Bremseinrichtung und des Wälzlagers erleichtert.

Vorzugsweise ist der aus Elastomer gebildete Verbindungsabschnitt in der Aufnahme mit Spiel aufgenommen. Vorzugsweise ist die Dicke oder Höhe des in der Aufnahme aufgenommenen Verbindungsabschnitts geringer als die (axiale) Höhe der Aufnahme oder der Abstand zwischen den Seitenwänden der Aufnahme. Dadurch wird/ werden in vorteilhafter Weise die Montage der Bremseinrichtung, die Deformation während des Einbaus und/ oder die Bewegung der elastischen Bremseinrichtung zwischen der ersten und zweiten Position erleichtert.

Alternativ ist der aus Elastomer gebildete Verbindungsabschnitt in der Aufnahme des spielfrei aufgenommen, zum Beispiel geklemmt und/ oder gequetscht, wodurch ein besonders fester Halt der elastischen Bremseinrichtung in dem Wälzlager garantiert ist.

Vorzugsweise ist in der Aufnahme für den Verbindungsabschnitt zumindest ein Haltelement und/ oder eine Verdrehsicherung für den Verbindungsabschnitt vorgesehen, z.B. ein Fortsatz, Vorsprung oder eine Einschnürung. Vorzugsweise ist das Haltelement oder die Verdrehsicherung einteilig/ integral mit dem inneren/ äußeren Laufring ausgebildet, insbesondere mit der Aufnahme, zum Beispiel der Rückwand und/ oder einer Seitenwand der Aufnahme. Vorzugsweise ragt das zumindest eine Haltelement oder die eine Verdrehsicherung in die Aufnahme oder in einen Innenraum der Aufnahme. Mit Hilfe dieses Halteelements oder der Verdrehsicherung wird in vorteilhafter Weise eine Bewegung, insbesondere Drehbewegung, oder Mitnahme der elastischen Bremseinrichtung durch rotierende Bauteile, insbesondere des Wälzlagers oder des Drehteils, in der Bremsposition verhindert und damit die Bremswirkung in vorteilhafter Weise erhöht.

Vorzugsweise ist die elastische Bremseinrichtung scheibenförmig und/ oder im Wesentlichen flach ausgebildet. Damit ist insbesondere eine kostengünstige Herstellung der elastischen Bremseinrichtung durch Stanzen oder Spritzguss möglich.

Vorzugsweise umfasst die scheibenförmig und/ oder im Wesentlichen flach ausgebildete elastische Bremseinrichtung zumindest einen der folgenden Abschnitte: eine innere Mantelfläche am Innenumfang; eine äußere Mantelfläche an Außenumfang; eine Oberseite; eine, insbesondere der Oberseite gegenüberliegende Unterseite; eine oder mehrere Kanten, die insbesondere die genannten Mantelflächen und/ oder Oberseite/ Unterseite miteinander verbinden; einen Körperabschnitt, der insbesondere den Verbindungsabschnitt mit dem Bremsabschnitt verbindet; einen oder mehrere Bremsabschnitte, der zum Beispiel eine Kante umfasst, insbesondere eine Kante am Innenumfang oder am Außenumfang der elastischen Bremseinrichtung und/oder eine Kante, welche die innere Mantelfläche und die Unterseite verbindet und/ oder eine Kante, welche die innere Mantelfläche und die Oberseite verbindet und/ oder eine Kante, welche die äußere Mantelfläche und die Unterseite verbindet und/ oder eine Kante, welche die äußere Mantelfläche und die Oberseite verbindet; alternativ oder zusätzlich umfasst der Bremsabschnitt zumindest einen Teil der inneren Mantelfläche und/ oder zumindest einen Teil der äußeren Mantelfläche und/oder zumindest einen Teil der Oberseite und/oder zumindest Teil der Unterseite der elastischen Bremseinrichtung.

Vorzugsweise ist die elastische Bremseinrichtung zumindest vor dem Einbau (vor der Deformation) in das Wälzlager, d.h. vor dem Einfügen des Verbindungsabschnitts in die dafür vorgesehene Aufnahme, scheibenförmig und/ oder im Wesentlichen flach ausgebildet. Besonders bevorzugt wird die elastische Bremseinrichtung durch den Einbau in das Wälzlager deformiert, wodurch sie im verbauten Zustand ihre scheibenförmige und/ oder im Wesentlichen flache Form verändert bzw. diese Form verändert wird.

Insbesondere verändert sich durch den Einbau die axiale (bezogen auf die Drehachse des Wälzlagers) Ausdehnung oder Höhenausdehnung der elastischen Bremseinrichtung. Insbesondere nimmt die elastische Bremseinrichtung durch die Deformation eine sich verjüngende Form und/ oder eine Form ähnlich einem Kegelstumpfmantel ein oder wird in eine derartige Form überführt. Insbesondere verjüngt sich die deformierte Bremseinrichtung in Richtung eines freien Endes des Wälzlagers. Vorzugsweise ragt aufgrund der Deformation ein (schmaler) Abschnitt der deformierten Bremseinrichtung über das freie Ende des Wälzlagers.

Insbesondere kommt es durch den Einbau in das Wälzlager zu einer Relativverschiebung des Innenumfangs und des Außenumfangs und/ oder der inneren Mantelfläche und der äußeren Mantelfläche der elastischen Bremseinrichtung und/ oder zu einer Relativverschiebung des Verbindungsabschnitts und des Bremsabschnitts. Vorzugsweise umfasst die im Vorstehenden genannte Deformation zumindest diese Relativverschiebung. Die Relativverschiebung erfolgt insbesondere axial (in Bezug auf die Drehachse des Wälzlagers).

Alternativ ist die elastische Bremseinrichtung auch nach dem Einbau in das Wälzlager, d.h. nach dem Einfügen des Verbindungsabschnitts in die dafür vorgesehene Aufnahme, scheibenförmig und/ oder im Wesentlichen flach ausgebildet. Damit kann in vorteilhafter Weise eine - in Bezug auf die Drehachse - geringe axiale Ausdehnung des Wälzlagers erzielt werden.

An dem inneren Laufring und vorzugsweise zusätzlich an einem mit dem Wälzlager verbundenen Bauteil ist ein Kontaktbereich vorgesehen, welcher von der elastischen Bremseinrichtung, insbesondere dem Bremsabschnitt, zum Abbremsen der Drehbewegung kontaktiert wird. Vorzugsweise umfasst das mit dem Wälzlager verbundene Bauteil zum Beispiel ein Drehteil eines medizinischen oder dentalen, druckgasbetriebenen Handstücks, zum Beispiel ein Laufrad, ein Turbinenrad, eine Welle, eine Hohlwelle oder eine Werkzeughaltevorrichtung. Es umfasst die Kontaktfläche eine Oberfläche zumindest eines Teils des inneren Laufrings und vorzugsweise zusätzlich des mit dem Wälzlager verbundenen Bauteils.

Der Kontaktbereich ist gewinkelt oder schräg zu einer Drehachse des Wälzlagers angeordnet. Vorzugsweise ist der Kontaktbereich als schiefe Ebene zur Drehachse des Wälzlagers ausgebildet. Vorzugsweise nähert sich der Kontaktbereich, insbesondere aufgrund seiner gewinkelten, schrägen oder schiefen Anordnung oder konusförmigen Form, der Aufnahme für den Verbindungsabschnitt radial (bezogen auf die Drehachse des Wälzlagers) an. Durch diese genannten Anordnungen des Kontaktbereichs ist in vorteilhafter Weise sichergestellt, dass bei Verschleiß oder Abrieb der elastischen Bremseinrichtung der Kontakt zwischen der, vorzugsweise deformiert verbauten, elastischen Bremseinrichtung, insbesondere dem Bremsabschnitt, und dem gewinkelten, d.h. sich der Aufnahme für den Verbindungsabschnitt annähernden, Kontaktbereich bestehen bleibt, so dass trotz des Verschleißes eine ausreichende Bremswirkung oder Bremskraft erhalten bleibt.

Der Kontaktbereich weist insbesondere keine Rücksprünge, Vorsprünge, Einstiche, Nuten etc. auf. Dies erhöht zusätzlich in vorteilhafter Weise die Sicherheit, dass ein kontinuierlicher Kontakt zwischen der elastischen Bremseinrichtung und dem Kontaktbereich auch bei Verschleiß der elastischen Bremseinrichtung besteht.

Vorzugsweise weist das Wälzlager, insbesondere der innere oder äußere Laufring, an seinem freien Ende eine Fase auf. Vorzugsweise erstreckt sich der Kontaktbereich zwischen der Fase und der Laufbahn für den zumindest einen Rollkörper und/ oder der Kontaktbereich schließt an die Fase an. Die Fase ist somit insbesondere kein Teil des Kontaktbereichs. Vorzugsweise ist der Bremsabschnitt von der Fase radial und/ oder axial beabstandet und/ oder überdeckt die Fase nicht.

Vorzugsweise weist das Wälzlager einen Vorsprung auf, zum Beispiel eine Nase oder Schulter oder Ringschulter, der in einen Lagerinnenraum zwischen dem inneren Laufring und dem äußeren Laufring ragt. Vorzugsweise ist der Vorsprung anschließend an ein Rollkörper-nahes Ende des Kontaktbereichs angeordnet oder als Teil des Kontaktbereichs, an dessen Rollkörper-nahen Ende ausgebildet. Vorzugsweise bildet der Vorsprung eine Sicherung, damit die elastische Bremseinrichtung, insbesondere der Bremsabschnitt, den Kontaktbereich nicht verlässt und/ oder mit dem Rollelement in Kontakt kommt, wenn die Abmessung (Länge) der elastischen Bremseinrichtung durch Verschleiß abnimmt.

Vorzugsweise ist die elastische Bremseinrichtung durch den Einbau in das Wälzlager derart deformiert, dass zumindest ein Teil der elastischen Bremseinrichtung, insbesondere ein Körperabschnitt, der den Verbindungsabschnitt mit dem Bremsabschnitt verbindet, und/ oder der Bremsabschnitt, von dem zumindest einen Rollkörper wegweist und/ oder in Richtung eines freien Endes des Wälzlagers deformiert oder gebogen ist/ wird und/ oder einem freien Ende des Wälzlagers zugewandt ist. Diese durch den Einbau bewirkte Deformation ist vorzugsweise im Wesentlichen irreversibel, solange die elastische Bremseinrichtung in dem Wälzlager verbaut ist (abgesehen von einer geringen Reversibilität, die durch den Verschleiß der elastischen Bremseinrichtung bewirkt werden kann). Diese durch den Einbau bewirkte Deformation ist insbesondere auch vorhanden, wenn dem Wälzlager kein Druckgas zugeführt wird. Diese durch den Einbau bewirkte Deformation ist somit auch insbesondere vorhanden, wenn die elastische Bremseinrichtung die erste Position oder Bremsposition einnimmt.

Vorzugsweise ist die elastische Bremseinrichtung durch den Einbau um zumindest 5° oder zumindest 10°, vorzugsweise zwischen 5° und 75°, insbesondere zwischen 10° und 50° (in Bezug auf die scheibenförmige und/ oder im Wesentlichen flache Ausgangsform) deformiert.

Vorzugsweise ist der Körperabschnitt der elastischen Bremseinrichtung durch den Einbau in das Wälzlager deformiert und/ oder gebogen und/ oder von dem zumindest einen Rollkörper weggebogen und/ oder in Richtung eines freien Endes des Wälzlagers deformiert oder gebogen. Vorzugsweise entfernt sich zumindest ein Abschnitt des Körperabschnitts und/ oder des Bremsabschnitts der elastischen Bremseinrichtung während des Einbaus in das Wälzlager von dem zumindest einen Rollkörper und/ oder von einer orthogonal zur Drehachse angeordneten Mittelebene des Wälzlagers.

Vorzugsweise ist oder wird bei Zufuhr von Druckgas, d.h. bei Einnahme der zweiten Position, der Körperabschnitt und/ oder der Bremsabschnitt bewegt, gebogen und/ oder zusätzlich deformiert, insbesondere von dem Rollkörper wegbewegt, weggebogen und/ oder weiter deformiert. Insbesondere ist oder wird die durch den Einbau in das Wälzlager bewirkte Deformation bei Zufuhr von Druckgas weiter verstärkt. Die durch den Einbau bewirkte Deformation begünstigt somit in vorteilhafter Weise den Übergang des Bremsabschnitts von der ersten in die zweite Position.

Wie im Vorstehenden bereits beschrieben wird die Deformation erst durch den Einbau oder während des Einbaus der elastischen Bremseinrichtung in das Wälzlager bewirkt. Vor dem Einbau in das Wälzlager ist die elastische Bremseinrichtung vorzugsweise scheibenförmig und/ oder im Wesentlichen flach ausgebildet. Insbesondere ist die Deformation der elastischen Bremseinrichtung durch einen Kontakt des Bremsabschnitts, vorzugsweise einer Kante des Bremsabschnitts, mit dem Kontaktbereich an dem äußeren Laufring oder an dem inneren Laufring oder an einem mit dem Wälzlager verbundenen Bauteil bewirkt. Dies erleichtert insbesondere in vorteilhafter Weise die Montage, da die Deformation und das in Kontakt bringen des Kontaktbereichs mit dem Bremsabschnitts in einem Arbeitsgang erfolgen.

Die Aufnahme für den Verbindungsabschnitt ist am äußeren Laufring vorgesehen, wobei die radiale Entfernung (bezogen auf den Mittelpunkt der elastischen Bremseinrichtung, insbesondere der scheibenförmigen und/ oder im Wesentlichen flachen Bremseinrichtung) zwischen dem Außenumfang und dem Innenumfang der elastischen Bremseinrichtung in einem nicht deformierten (nicht verbauten) Zustand größer ist als die - bezogen auf eine Drehachse des Wälzlagers - radiale Entfernung zwischen der Rückwand der Aufnahme für den Verbindungsabschnitt und einem der Rückwand (radial) gegenüber liegenden Abschnitt der Außenseite des inneren Laufrings. Vorzugsweise ist dieser Abschnitt der Außenseite Teil des Kontaktbereichs. Damit ist auf einfache Weise eine Deformation der elastischen Bremseinrichtung beim Einbau in das Wälzlager möglich.

Vorzugsweise ist oder wird durch die Deformation eine Biegung, insbesondere eine stetige Biegung und/ oder eine Biegung ohne Kante, oder ein Radius in der elastischen Bremseinrichtung, insbesondere in dem Körperabschnitt und/ oder in dem Bremsabschnitt, gebildet. Vorzugsweise ist die Biegung anschließend an und/ oder nahe dem Verbindungsabschnitt angeordnet, wodurch in vorteilhafter Weise eine sanfte oder Material schonende Biegung erreicht ist. Vorzugsweise erstreckt sich die Biegung kontinuierlich, insbesondere jedoch mit unterschiedlichen Steigungen entlang ihrer Ausdehnung.

Vorzugsweise umfasst der Bremsabschnitt eine Kante an dem Innenumfang oder an einer den Innenumfang bildenden inneren Mantelfläche der elastischen Bremseinrichtung, die insbesondere durch die beim Einbau bewirkte Deformation mit dem Kontaktbereich in Kontakt kommt oder steht. Vorzugsweise umfasst der Bremsabschnitt auch einen an diese Kante anschließenden Abschnitt der inneren Mantelfläche und/ oder der dem Rollkörper zugewandten Unterseite der elastischen Bremseinrichtung. Damit ist in vorteilhafter Weise ein Bremsabschnitt gebildet, der sowohl eine ausreichende Bremswirkung erzielt als auch durch das Druckgas in die zweite Position bewegbar ist, d.h. insbesondere von dem Kontaktbereich angehoben oder gelöst werden kann.

Vorzugsweise ist/ sind der Bremsabschnitt und/ oder zumindest eine Bremsfläche des Bremsabschnitts und/ oder zumindest eine an die im Vorstehenden beschriebene Kante anschließender Abschnitt der inneren Mantelfläche und/ oder der Unterseite, die insbesondere Teil des Bremsabschnitts sind, einerseits und der Kontaktbereich, der von dem Bremsabschnitt zum Abbremsen der Drehbewegung kontaktiert wird, andererseits gewinkelt zueinander angeordnet. Die gewinkelte Anordnung ist zum Beispiel durch die im Vorstehenden schon beschrieben schräge Anordnung oder konusförmige Ausbildung des Kontaktbereichs und/ oder durch die Deformation der elastischen Bremseinrichtung durch den Einbau in das Wälzlager bewirkt. Die gewinkelte Anordnung garantiert wiederum, wie schon im Vorstehenden mehrmals beschrieben, in vorteilhafter Weise einen zuverlässigen Kontakt zwischen der elastischen Bremseinrichtung und dem Kontaktbereich und damit eine trotz Verschleiß im Wesentlichen gleichbleibende Bremswirkung.

Vorzugsweise ist die elastische Bremseinrichtung einteilig ausgebildet oder umfasst ein einziges Bauteil oder ist durch ein einziges Bauteil gebildet. Vorzugsweise besteht die einteilig ausgebildete elastische Bremseinrichtung aus einem Elastomer, so wie dies im Vorstehenden bereits beschrieben ist. Die einteilig ausgebildete Bremseinrichtung ermöglicht wiederum in vorteilhafter Weise eine einfache Herstellung (durch Stanzen oder Spritzguss) und/ oder eine einfache Montage an dem Wälzlager oder in dem Lagerinnenraum des Wälzlagers.

Vorzugsweise ist eine (- in Bezug auf die Drehachse des Wälzlagers - axiale) Höhe oder Materialstärke des Verbindungsabschnitts größer als eine (axiale) Höhe oder Materialstärke des Bremsabschnitts und/ oder eines Körperabschnitts der elastischen Bremseinrichtung, wobei der Körperabschnitt den Verbindungsabschnitt mit dem Bremsabschnitt verbindet. Damit kann in vorteilhafter Weise eine besonders zuverlässige Befestigung des Verbindungsabschnitts in der Aufnahme erreicht werden.

Alternativ ist eine (- in Bezug auf die Drehachse des Wälzlagers - axiale) Höhe oder Materialstärke des Verbindungsabschnitts im Wesentlichen gleich einer (axialen) Höhe oder Materialstärke des Bremsabschnitts und/ oder eines Körperabschnitts der elastischen Bremseinrichtung, wobei der Körperabschnitt den Verbindungsabschnitt mit dem Bremsabschnitt verbindet. Damit steht in vorteilhafter Weise eine elastische Bremseinrichtung mit besonders geringer Höhe zur Verfügung, wodurch wiederum eine geringere Bauhöhe des Wälzlagers erreicht werden kann.

Vorzugsweise umfasst das Wälzlager ein Dichtelement oder Deckelement zum Abdichten eines Lagerinnenraums zwischen dem inneren Laufring und dem äußeren Laufring, wobei (in einem Längsschnitt durch das Wälzlager) der zumindest eine Rollkörper zwischen dem Dichtelement und der elastischen Bremseinrichtung angeordnet ist. Das Dichtelement ist insbesondere dafür vorgesehen, dass kein oder wenig Schmiermittel aus dem Wälzlager austritt und/ oder wenig oder keine Verschmutzung in das Wälzlager eindringt. Das Dichtelement ist insbesondere starr ausgebildet, so dass es durch das Druckgas, das insbesondere die elastische Bremseinrichtung betätigt, nicht oder nur unwesentlich bewegbar ist. Das Dichtelement oder Deckelement ist insbesondere scheibenförmig oder als Deckscheibe ausgebildet.

Vorzugsweise ist das Dichtelement an dem inneren Laufring oder dem äußeren Laufring befestigt und erstreckt sich in Richtung des anderen (äußeren oder inneren) Laufring, ohne diesen zu kontaktieren. Vorzugsweise erstreckt sich das Dichtelement in dem Lagerinnenraum zwischen dem äußeren oder inneren Laufring. Vorzugsweise ist das Dichtelement scheibenförmig und/ oder im Wesentlichen flach ausgebildet.

Vorzugsweise ist das Dichtelement oder Deckelement durch ein zusätzliches Befestigungselement oder Sicherungselement, zum Beispiel einen Federring, einen Sprengring, ein Halteelement, ein Federelement, in einer Aufnahme des äußeren Laufrings oder des inneren Laufrings befestigt. Vorzugsweise ist dieses Dichtelement aus Kunststoff gebildet.

Alternativ ist das Dichtelement oder Deckelement einteilig mit dem inneren Laufring oder dem äußeren Laufring ausgebildet. Vorzugsweise ist dieses Dichtelement aus Metall gebildet.

Das Dichtelement oder Deckelement ist vorzugsweise an oder nahe einem (freien) Ende des Wälzlagers angeordnet. Das Dichtelement ist insbesondere an dem Ende des Wälzlages angeordnet, das dem Ende des Wälzlagers mit der elastischen Bremseinrichtung gegenüberliegt.

Vorzugsweise umfasst der zumindest eine Rollkörper ein metallisches oder keramisches Material.

Vorzugsweise ist das zumindest eine im Vorstehenden beschriebene Wälzlager mit einer elastischen Bremseinrichtung als Rillenkugellager oder als Schulterkugellager ausgebildet.

Gemäß einem Ausführungsbeispiel ist ein medizinisches oder dentales, druckgasbetriebenes Handstück vorgesehen, das umfasst: ein durch Druckgas in Drehung versetzbares Drehteil oder rotierbares Teil und zumindest ein im Vorstehenden beschriebenes Wälzlager mit einer elastischen Bremseinrichtung zur drehbaren Lagerung des Drehteils oder rotierbaren Teils.

Das Handstück ist insbesondere über eine endseitige Kupplungsvorrichtung mit einer Druckgasquelle verbindbar. Das Handstück weist bevorzugt einen Kopfteil mit einer Werkzeughaltevorrichtung zum Halten eines mit dem Handstück verbindbaren Werkzeugs und einen an den Kopfteil anschließenden (mit einer Hand haltbaren) Griffteil auf. An dem Handstück kann des Weiteren eine Beleuchtungsvorrichtung, vorzugsweise zumindest eine Leuchtdiode, vorgesehen sein, die insbesondere am oder nahe dem Kopfteil angeordnet ist. Die Beleuchtungsvorrichtung ist zur Abgabe von elektromagnetischer Strahlung auf oder in Richtung der Behandlungsstelle vorgesehen.

Das Handstück umfasst eine durch ein Druckgas antreibbare, insbesondere in Rotation versetzbare, Antriebsvorrichtung, zum Beispiel ein Laufrad. Die Antriebsvorrichtung ist insbesondere mit der lösbaren Werkzeughaltevorrichtung zum Halten eines mit dem Handstück verbindbaren Werkzeugs operativ verbunden. Die Werkzeughaltevorrichtung umfasst zum Beispiel eine oder mehrere Hohlwellen. Das im Vorstehenden genannte Drehteil oder rotierbare Teil umfasst zum Beispiel die Antriebsvorrichtung, insbesondere das Laufrad, und/ oder die Werkzeughaltevorrichtung. Zum Lösen des Werkzeugs aus der Werkzeughaltevorrichtung ist eine Werkzeuglösevorrichtung vorgesehen, die insbesondere ein am Kopfteil angeordnetes Betätigungselement, zum Beispiel einen Druckknopf, aufweist.

Das Handstück umfasst des Weiteren eine vorzugsweise länglich und hohl oder rohrförmig ausgebildete Außenhülse, so dass diese insbesondere einen Innenraum bildet. Die längliche Außenhülse erstreckt sich vorzugsweise entlang ihrer Mittelachse. Die Außenhülse ist vorzugsweise derart gebogen, dass sie zumindest zwei gewinkelt zueinander angeordnete Abschnitte aufweist. In der Außenhülse, insbesondere des Griffteils, oder in deren Innenraum sind vorzugsweise eine oder mehrere Fluidleitungen und / oder ein elektrischer Leiter zur Versorgung der Beleuchtungsvorrichtung mit elektrischer Energie vorgesehen. Die Beleuchtungsvorrichtung ist vorzugsweise in oder an der Öffnung der Außenhülse vorgesehen. Durch eine oder mehrere weitere Öffnungen am Handstück, insbesondere am Kopfteil, ist vorzugsweise ein Kühl- und/ oder Spülfluid in Richtung der Behandlungsstelle abgebbar.

Insbesondere in jenem Teil der Außenhülse, der den Kopfteil umgibt, sind die Antriebsvorrichtung, die Werkzeughaltevorrichtung und/ oder das Drehteil durch zumindest ein im Vorstehenden beschriebenes Wälzlager mit einer elastischen Bremseinrichtung drehbar gelagert. Das zumindest eine Wälzlager bzw. die mehreren Wälzlager sind jeweils durch einen O-Ring und/ oder ein Federelement im Kopfteil gelagert oder vorgespannt.

Das Laufrad, die Werkzeughaltevorrichtung und das zumindest eine Wälzlager mit einer elastischen Bremseinrichtung bilden vorzugsweise eine Lagereinheit. Diese Lagereinheit ist insbesondere als separate Baueinheit ausgebildet, zum Beispiel in Form einer Patrone, die insbesondere austauschbar in dem Kopfteil oder Hohlraum des Kopfteils aufgenommen ist.

Die Erfindung wird nachfolgend anhand bevorzugter Ausführungsbeispiele und Bezug nehmend auf die beigefügten Zeichnungen erläutert.

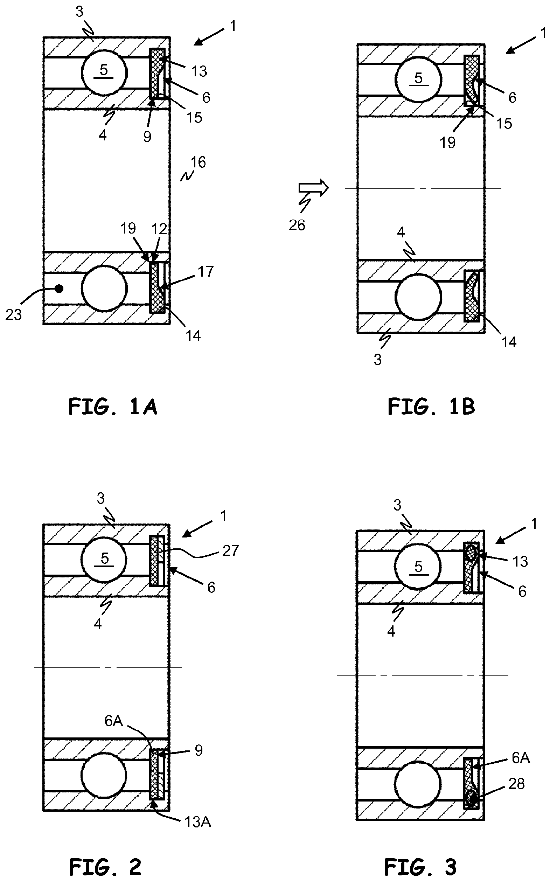

Figur 1A zeigt ein nicht erfindungsgemäßes erstes Ausführungsbeispiel eines Wälzlagers mit einer einteiligen, elastischen Bremseinrichtung, die an der Innenseite des äußeren Laufrings in einer Aufnahme befestigt ist und die zwei Bremsflächen aufweist, die zwei durch einen Rücksprung geformte Kontaktflächen an der Außenseite des inneren Laufrings kontaktieren, wobei die elastische Bremseinrichtung nicht mit Druckgas versorgt ist und eine erste Position oder Bremsposition einnimmt, in welcher die elastische Bremseinrichtung (aufgrund des Kontaktes mit den Kontaktflächen des Kontaktbereichs) eine (erhöhte) Bremswirkung ausübt.
Figur 1B zeigt das nicht erfindungsgemäße Wälzlager der Figur 1A, welches (gemäß der Figur 1B von links) mit Druckgas versorgt ist und eine zweite Position einnimmt, in welcher die elastische Bremseinrichtung (aufgrund des verringerten oder völlig aufgehobenen Kontaktes mit den Kontaktflächen des Kontaktbereichs) keine Bremswirkung oder eine verringerte Bremswirkung ausübt.
Figur 2 zeigt ein zweites nicht erfindungsgemäßes Ausführungsbeispiel eines Wälzlagers mit einer elastischen Bremseinrichtung, die durch ein Sicherungselement, zum Beispiel einen Federring oder Sprengring, in einer Aufnahme an der Innenseite des äußeren Laufrings befestigt ist.
Figur 3 zeigt ein drittes nicht erfindungsgemäßes Ausführungsbeispiel eines Wälzlagers mit einer mehrteiligen elastischen Bremseinrichtung, die ein Bremselement und ein, vorzugsweise metallisches, Stütz- oder Versteifungselement aufweist, welches (vollständig) in dem Bremselement aufgenommen und insbesondere unlösbar mit dem Bremselement verbunden ist.
Figur 4 zeigt ein viertes nicht erfindungsgemäßes Ausführungsbeispiel eines Wälzlagers mit mehreren (zwei) elastischen Bremseinrichtungen, wobei die Kontaktbereiche der mehreren elastischen Bremseinrichtungen unterschiedlich ausgebildet sind.
Figur 5 zeigt ein fünftes nicht erfindungsgemäßes Ausführungsbeispiel eines Wälzlagers mit einer elastischen Bremseinrichtung, wobei der an der Außenseite des inneren Laufrings vorgesehene Kontaktbereich zur Vergrößerung der Kontaktfläche und/ oder zur Erhöhung der Bremswirkung einen Vorsprung umfasst, der in den Spalt zwischen dem inneren und dem äußeren Laufring ragt.
Figur 6 zeigt ein sechstes nicht erfindungsgemäßes Ausführungsbeispiel eines Wälzlagers mit einer elastischen Bremseinrichtung, wobei der Kontaktbereich eine einzige Kontaktfläche aufweist, die schräg zu der Längs- oder Drehachse des Wälzlagers angeordnet ist oder konusförmig oder als Fase ausgebildet ist.
Figur 7 zeigt ein siebtes nicht erfindungsgemäßes Ausführungsbeispiel eines Wälzlagers mit einer elastischen Bremseinrichtung, wobei der Kontaktbereich eine einzige, gerade, parallel zur Mittel- oder Drehachse des Wälzlagers angeordnete Kontaktfläche umfasst, die durch einen Abschnitt der Außenseite des inneren Laufrings gebildet ist.
Figur 8 zeigt ein achtes erfindungsgemäßes Ausführungsbeispiel eines Wälzlagers mit einer elastischen Bremseinrichtung, wobei der Kontaktbereich eine einzige, insbesondere gewinkelt zur Mittel- oder Drehachse des Wälzlagers angeordnete, Kontaktfläche aufweist, welche die Stirnfläche des inneren Laufrings umfasst.
Figur 9 zeigt ein neuntes erfindungsgemäßes Ausführungsbeispiel eines Wälzlagers mit einer elastischen
   Bremseinrichtung, wobei die Aufnahme des Wälzlagers für zumindest einen Teil der elastischen Bremseinrichtung, insbesondere ein scheibenförmiges Bremselement, als Führung ausgebildet ist.
Figur 10 zeigt ein zehntes erfindungsgemäßes Ausführungsbeispiel eines Wälzlagers mit einer
   elastischen Bremseinrichtung, wobei eine Kontaktfläche des Kontaktbereichs an einem mit dem Wälzlager verbundenen Bauteil oder Drehteil, insbesondere einer Hohlwelle, vorgesehen ist.
Figur 11 zeigt ein erfindungsgemäßes Ausführungsbeispiel eines medizinischen oder dentalen druckgasbetriebenen Handstücks mit einem durch Druckgas in Drehung versetzbaren Drehteil, das insbesondere eine Hohlwelle oder einen Teil einer Werkzeughaltevorrichtung umfasst, und mit zwei Wälzlagern gemäß der Figur 10 zur drehbaren Lagerung des Drehteils.
Figur 12A zeigt ein Ausführungsbeispiel einer scheibenförmigen und/ oder im Wesentlichen flachen, elastischen Bremseinrichtung mit einem verdickten Verbindungsabschnitt zum Befestigen der elastischen Bremseinrichtung an einem Wälzlager.
Figur 12B zeigt die elastische Bremseinrichtung der Figur 12A in einer Schnittansicht.
Figur 13A zeigt ein nicht erfindungsgemäßes Ausführungsbeispiel eines Wälzlagers mit der elastischen Bremseinrichtung gemäß den Figuren 12, 12A, wobei die elastische Bremseinrichtung durch den Einbau in das Wälzlager deformiert ist.
Figur 13B zeigt das nicht erfindungsgemäße Wälzlager der Figur 13A bei Luftzufuhr mit verringerter Bremswirkung.
Figur 14A zeigt ein Ausführungsbeispiel einer scheibenförmigen und/ oder im Wesentlichen flachen, elastischen Bremseinrichtung mit einem Verbindungsabschnitt zum Befestigen der elastischen Bremseinrichtung an einem Wälzlager, dessen (axiale) Höhe im Wesentlichen gleich einer (axialen) Höhe des Bremsabschnitts und/ oder der gesamten elastischen Bremseinrichtung ist.
Figur 14B zeigt die elastische Bremseinrichtung der Figur 14A in einer Schnittansicht.
Figur 15A zeigt ein nicht erfindungsgemäßes Ausführungsbeispiel eines Wälzlagers mit der elastischen Bremseinrichtung gemäß den Figuren 14, 14A, wobei die elastische Bremseinrichtung durch den Einbau in das Wälzlager deformiert ist.
Figur 15B zeigt das nicht erfindungsgemäße Wälzlager der Figur 15A bei Luftzufuhr mit verringerter Bremswirkung.
Figur 16A zeigt ein erstes Ausführungsbeispiel einer scheibenförmigen und/ oder im Wesentlichen flachen, elastischen und beschichteten Bremseinrichtung.
Figur 16B zeigt ein zweites Ausführungsbeispiel einer scheibenförmigen und/ oder im Wesentlichen flachen, elastischen und beschichteten Bremseinrichtung.
Figur 17 zeigt ein nicht erfindungsgemäßes Ausführungsbeispiel eines Wälzlagers mit der elastischen Bremseinrichtung gemäß der Figur 16A, wobei die elastische Bremseinrichtung durch den Einbau in das Wälzlager deformiert ist.
Figur 18 zeigt ein nicht erfindungsgemäßes Ausführungsbeispiel eines medizinischen oder dentalen, druckgasbetriebenen Handstücks mit einem durch Druckgas in Drehung versetzbaren Drehteil, das durch ein Wälzlager gelagert ist, das eine elastische Bremseinrichtung aufweist, die durch den Einbau in das Wälzlager deformiert ist.

Im Folgenden sind Merkmale der in den Figuren 1 - 18 dargestellten Wälzlager 1 für ein medizinisches oder dentales, druckgasbetriebenes Handstück 2 und der elastischen Bremseinrichtungen 6 beschrieben:
Das Wälzlager 1 für ein medizinisches oder dentales, druckgasbetriebenes Handstück 2, umfasst einen äußeren Laufring 3, einen inneren Laufring 4 und zumindest einen Rollkörper 5, der in einem Lagerinnenraum 23 zwischen dem äußeren Laufring 3 und dem inneren Laufring 4 angeordnet ist. Der äußere Laufring 3 und der innere Laufring 4
weisen jeweils eine Laufbahn auf, in denen der zumindest eine Rollkörper 5 aufgenommen und geführt ist. Das Wälzlager 1 ist um eine Mittelachse oder Drehachse 16 drehbar.

In dem Lagerinnenraum 23 ist des Weiteren ein Käfig 25 mit einer oder mehreren Taschen aufgenommen, wobei sich in jeder Tasche ein Rollkörper 5 befindet. Der Käfig 25 ist insbesondere aus einem Kunstharz oder Kunststoff gefertigt. Im Lagerinnenraum 23 ist vorzugsweise auch ein Schmierstoff zur Lagerschmierung enthalten.

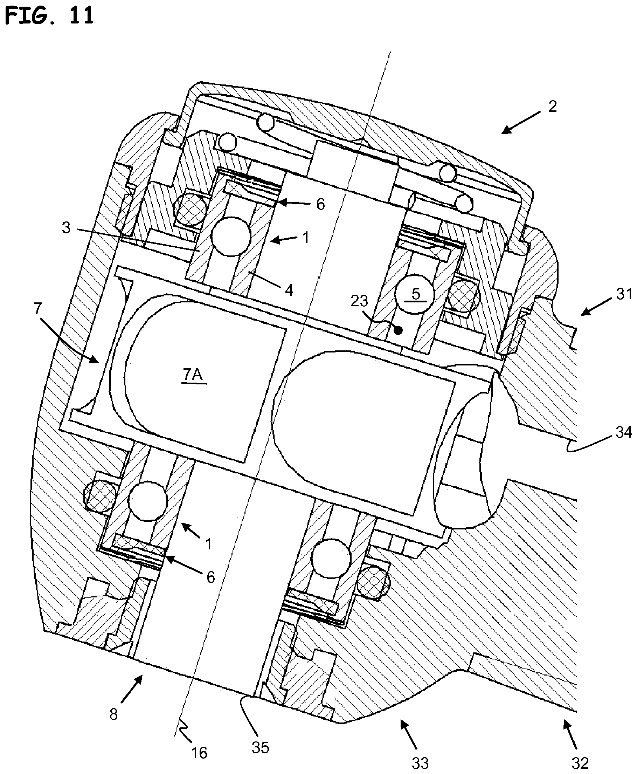

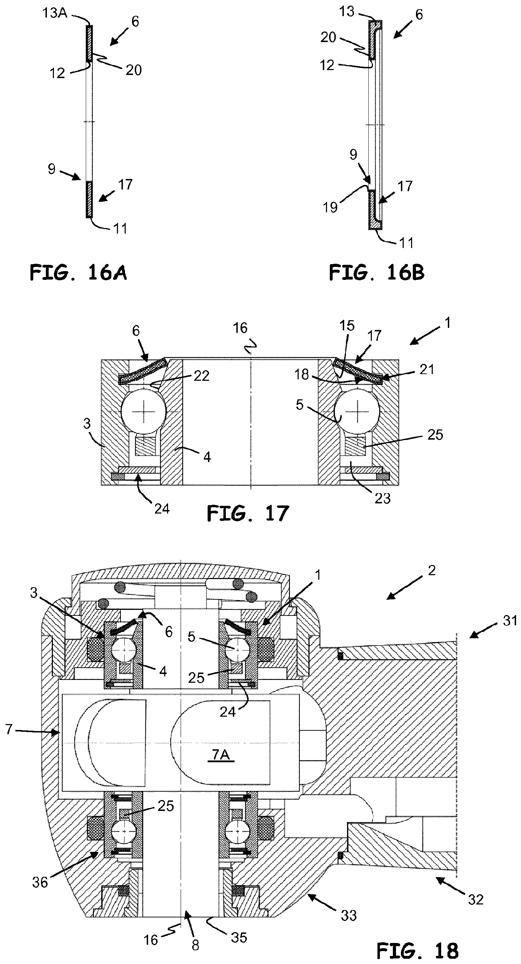

Am Wälzlager 1 ist eine elastische Bremseinrichtung 6 vorgesehen, die kontaktierend auf das Wälzlager 1 und/ oder ein mit dem Wälzlager 1 verbundenes Bauteil 7, 8, insbesondere Drehteil oder rotierbares Teil, einwirkt, um eine Drehbewegung des Wälzlagers 1 und/ oder des mit dem Wälzlager 1 verbundenen Bauteils 7, 8 abzubremsen. Das Bauteil umfasst zum Beispiel eine mit Druckgas antreibbare, insbesondere in Rotation versetzbare, Antriebsvorrichtung, zum Beispiel ein Laufrad 7 und/ oder eine lösbare Werkzeughaltevorrichtung 8 zum Halten eines mit dem Handstück 2 verbindbaren Werkzeugs (siehe Figuren 11, 18).

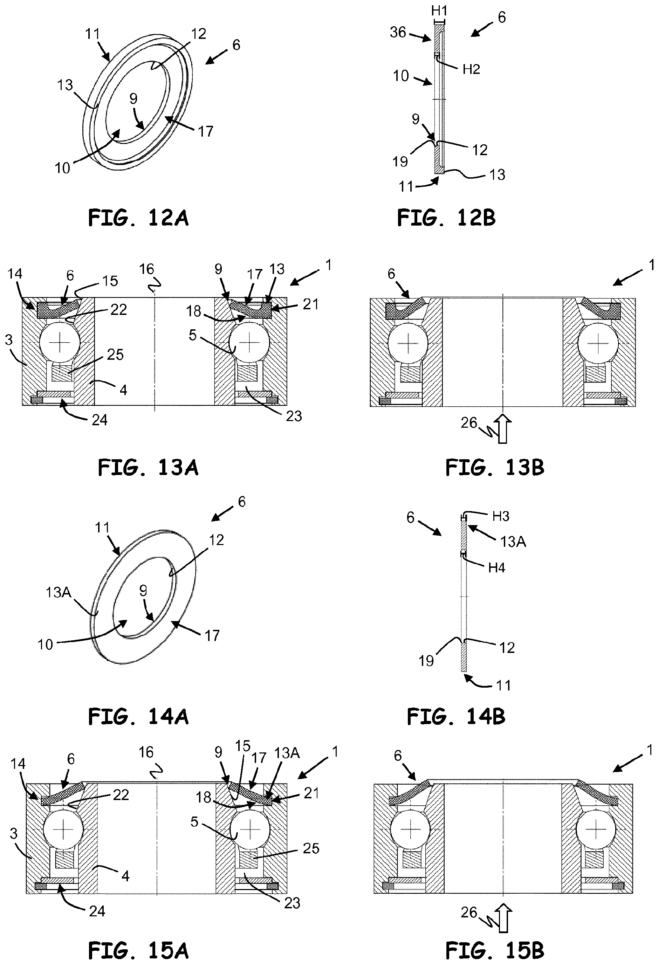

Die elastische Bremseinrichtung 6 ist ringförmig mit einer zentralen Öffnung 10 ausgebildet (siehe insbesondere die Figuren 12A, 12B, 14A, 14B, 16A, 16B). Sie umfasst einen Außenumfang 11, einen die zentrale Öffnung 10 begrenzenden Innenumfang 12 und einen Bremsabschnitt 9 zum Abbremsen der Drehbewegung des Wälzlagers 1 und/ oder des mit dem Wälzlager 1 verbundenen Bauteils 7, 8. An dem Außenumfang 11 ist ein Verbindungsabschnitt 13, 13A zum Befestigen der elastischen Bremseinrichtung 6 an dem Wälzlager 1 vorgesehen.

Der Bremsabschnitt 9 oder zumindest eine oder mehrere Bremsflächen und/ oder zumindest eine oder mehrere Kanten des Bremsabschnitts 9 ist/ sind dazu vorgesehen, durch Kontakt eine Bremswirkung oder Bremskraft auf das Wälzlager 1, insbesondere auf zumindest ein Bauteil des Wälzlagers 1, zum Beispiel den äußeren Laufring 3 oder den inneren Laufring 4, und/ oder auf ein mit dem Wälzlager 1 verbundenes Bauteil 7, 8 auszuüben.

Der Körperabschnitt 17 verbindet den Verbindungsabschnitt 13, 13A mit dem Bremsabschnitt 9. Der Bremsabschnitt 9 kann auch als Teil des Körperabschnitt 17 ausgebildet sein. Neben dem Bremsabschnitt 9 kann auch der Körperabschnitt 17 so ausgebildet sein, dass er durch ein Druckgas, insbesondere Druckluft, bewegbar, biegbar oder verformbar ist, so dass insbesondere die Bewegbarkeit und/ oder die Bremswirkung des Bremsabschnitts 9 und/ oder die Rückbewegung von der zweiten Position in die erste Position die unterstützt oder verstärkt wird.

Die elastische Bremseinrichtung 6, insbesondere der Bremsabschnitt 9, zum Beispiel zumindest eine Bremsfläche und/ oder Kante des Bremsabschnitts 9, ist/ sind durch ein Druckgas, insbesondere Druckluft, derart betätigbar oder verformbar, dass die durch den Kontakt zwischen der Bremseinrichtung 6 und dem Wälzlager 1 und/ oder dem mit dem Wälzlager verbundenen Bauteil 7, 8 bewirkte Bremswirkung (oder Bremskraft) veränderbar ist. Ein derartiger die Bremswirkung verändernder Druckgasstrom ist in den Figuren 1B, 13B und 15B durch den Pfeil 26 symbolisiert. In diesen Figuren 1B, 13B, 15B ist auch die durch den Druckgasstrom 26 bewirkte Bewegung und/ oder Formänderung und/ oder Biegung und/ oder (zusätzliche) Deformation der Bremseinrichtung 6, insbesondere des Bremsabschnitts 9, erkennbar, durch welche es bei Druckgaszufuhr zu einer Veränderung, insbesondere Verringerung oder völligen Aufhebung, des Kontakts und/ oder der Kontaktfläche und/ oder der Bremswirkung zwischen dem Bremsabschnitt 9 und dem Wälzlager 1 und/ oder dem damit verbundenen Bauteil 7, 8 kommt. In diesen Figuren 1B, 13B, 15B nimmt die elastische Bremseinrichtung 6, insbesondere der Bremsabschnitt 9, somit die bereits im Vorstehenden beschriebene zweite Position ein. Entsprechend nimmt die elastische Bremseinrichtung 6, insbesondere der Bremsabschnitt 9, in den Figuren 1A, 2 - 11, 13A, 15A, 17, 18 die erste Position oder Bremsposition ein, in welcher die elastische Bremseinrichtung 6 (aufgrund des Kontaktes mit zumindest einem Teil des Wälzlagers 1 und/ oder einem mit dem Wälzlager 1 verbundenen Bauteil oder Drehteil 7, 8) eine Bremswirkung oder eine erhöhte Bremswirkung ausübt.

Zur Ausübung der Bremswirkung und/ oder zur Verstärkung der Bremswirkung und/ oder zur (zuverlässigen) Rückstellung in die erste Position oder Bremsposition ist/ sind der Bremsabschnitts 9 und/ oder der Körperabschnitt 17 vorzugsweise vorgespannt, insbesondere entgegen der Flussrichtung des Druckgasstroms 26. Besonders bevorzugt ist die Vorspannung entweder durch ein Federelement der elastischen Bremseinrichtung 6 und/ oder durch eine mechanische Spannung des Materials der elastischen Bremseinrichtung 6, insbesondere des Bremsabschnitts 9 und/ oder des Körperabschnitts 17, bewirkt.

Die elastische Bremseinrichtung 6, insbesondere der Verbindungsabschnitt 13, 13A, ist in einer Aufnahme 14 angeordnet, die beispielsweise als ringförmiger Rücksprung oder als ringförmige Nut an dem äußeren Laufring 3, insbesondere an dessen Innenseite, oder an dem inneren Laufring 4 ausgebildet ist.

Zumindest ein Teil der elastischen Bremseinrichtung 6 ist in dem Lagerinnenraum 23 des Wälzlagers 1 angeordnet und/ oder bedeckt und/ oder verschließt den Lagerinnenraum 23.

Das Wälzlager 1 und/ oder das mit dem Wälzlager 1 verbundenen Bauteil 7, 8 weist einen Kontaktbereich 15 auf, der zur Erzeugung der Bremswirkung oder Bremskraft von der Bremseinrichtung 6, insbesondere dem Bremsabschnitt 9 oder zumindest einem Teil des Bremsabschnitts 9, kontaktiert ist oder wird. Der Kontaktbereich 15 ist insbesondere an der Außenseite des inneren Laufrings 4 vorgesehen. Der Kontaktbereich 15 kann eine oder mehrere Kontaktflächen aufweisen, die von dem Bremsabschnitt 9 kontaktiert sind oder werden.

Im Folgenden sind weitere Merkmale der Ausführungsbeispiele der Figuren 1A - 18 beschrieben, welche insbesondere nicht in allen dargestellten Ausführungsbeispielen implementiert sind.

Die Figuren 1A - 10 zeigen ein Wälzlager 1 mit einer elastischen Bremseinrichtung 6, die an der Innenseite des äußeren Laufrings 3 in einer Aufnahme 14 befestigt ist. Die elastische Bremseinrichtung 6 ist scheibenförmig und/ oder im Wesentlichen flach mit einer zentralen Öffnung ausgebildet.

Der Bremsabschnitt 9 der elastischen Bremseinrichtung 6 der Figuren 1A - 10 weist zumindest eine Bremsfläche auf. Diese zumindest eine Bremsfläche ist zum Beispiel (in der ersten Position oder Bremsposition) im Wesentlichen parallel zur Drehachse 16 angeordnet und/ oder durch den die zentrale Öffnung begrenzenden Innenumfang 12 gebildet. Alternativ ist diese zumindest eine Bremsfläche (in der ersten Position oder Bremsposition) gewinkelt mit einem Winkel größer 0°, vorzugsweise im Wesentlichen rechtwinkelig, zur Drehachse 16 angeordnet und/ oder durch einen Abschnitt der Seitenfläche, insbesondere der Unterseite, der elastischen Bremseinrichtung 6 oder des Körperabschnitts 17 gebildet.

Gemäß den Ausführungsbeispielen der Figuren 1 - 5 umfasst der Bremsabschnitt 9 zumindest zwei Bremsflächen, die gewinkelt zueinander angeordnet sind und insbesondere die im Vorstehenden genannte, durch den Innenumfang 12 gebildet Bremsfläche und die im Vorstehenden genannte, durch einen Abschnitt der Seitenfläche, oder des Körperabschnitts 17 gebildet Bremsfläche umfassen. Vorzugsweise sind die beiden Bremsflächen oder der Innenumfang 12 und die Seitenfläche durch eine Kante 19 miteinander verbunden, wobei diese insbesondere auch Teil des Bremsabschnitts 9 ist und eine Bremswirkung ausübt.

Der Kontaktbereich 15 der Wälzlager 1 der Figuren 1A - 10 weist zumindest eine Kontaktfläche auf. Diese zumindest eine Kontaktfläche ist zum Beispiel im Wesentlichen parallel zur Drehachse 16 angeordnet. Alternativ ist diese zumindest eine Kontaktfläche gewinkelt mit einem Winkel größer 0°, zum Beispiel im Wesentlichen rechtwinkelig, zur Drehachse 16 angeordnet.

Gemäß den Ausführungsbeispielen der Figuren 1 - 7 ist der Kontaktbereich 15 an der Außenseite des inneren Laufrings 4 vorgesehen und/ oder umfasst zumindest einen Abschnitt der Außenseite des inneren Laufrings 4.

Gemäß den Ausführungsbeispielen der Figuren 1 - 5 umfasst der Kontaktbereich 15 zumindest zwei Kontaktflächen, die gewinkelt zueinander angeordnet sind und insbesondere die im Vorstehenden genannte, im Wesentlichen parallel zur Drehachse 16 angeordnet Kontaktfläche und die im Vorstehenden genannte, gewinkelt zur Drehachse 16 angeordnete Kontaktfläche umfassen. Vorzugsweise sind die beiden Bremsflächen oder der Innenumfang 12 und die Seitenfläche durch eine Innenkante miteinander verbunden. Der Kontaktbereich 15 ist insbesondere als Schulter oder Stufe ausgebildet.

Gemäß den Ausführungsbeispielen der Figuren 1 - 5 kontaktiert zur Erzeugung der Bremswirkung zumindest eine der zwei Bremsflächen zumindest eine der zwei Kontaktflächen, insbesondere kontaktiert die durch den Innenumfang 12 gebildet Bremsfläche die im Wesentlichen parallel zur Drehachse 16 angeordnete Kontaktfläche oder es kontaktiert die durch einen Abschnitt der Seitenfläche oder des Körperabschnitts 17 gebildet Bremsfläche die gewinkelt zur Drehachse 16 angeordnete Kontaktfläche. Besonders bevorzugt kontaktiert gleichzeitig jeweils eine der beiden Bremsflächen eine der beiden Kontaktflächen, wodurch eine besonders hohe Bremswirkung erzielbar ist.

Die gesamte elastische Bremseinrichtung 6 der Figuren 1A, 1B, 4 - 8 und 10 ist einteilig und aus, vorzugsweise einem einzigen, Elastomer geformt. Insbesondere ist somit zum Befestigen der elastischen Bremseinrichtung 6 an dem Wälzlager 1 der ausschließlich aus Elastomer gebildete Verbindungsabschnitt 13 in der Aufnahme 14 des äußeren Laufrings 3 aufgenommen.

Der Verbindungsabschnitt 13 der elastischen Bremseinrichtung 6 der Figuren 1A, 1B, 3 - 8, 10, 12A - 13B und 16B ist jeweils verdickt und/ oder weist eine axial (in Bezug auf die Drehachse 16) größere Höhe H1 (siehe Figur 12B) auf als die übrige elastische Bremseinrichtung 6, insbesondere als der Körperabschnitt 17 und/ oder der Bremsabschnitt 9, siehe die Höhe H2 in der Figur 12B. Im Gegensatz dazu ist der Verbindungsabschnitt 13A der elastischen Bremseinrichtung 6 der Figuren 2, 9, 14A, 14B, 15A, 15B, 16A, 17 und 18 im Wesentlichen nicht dicker und/ oder weist im Wesentlichen keine axial (in Bezug auf die Drehachse 16) größere Höhe H3 (siehe Figur 14B) auf als die übrige elastische Bremseinrichtung 6, siehe die Höhe H4. Selbstverständlich ist es denkbar, die in den Figuren 1 - 18 dargestellten elastischen Bremseinrichtungen 6 mit den verdickten oder nicht verdickten Verbindungsabschnitten 13 zu vertauschen, so dass zum Beispiel die elastische Bremseinrichtung 6 der Figuren 1A, 1B einen nicht verdickten Verbindungsabschnitt 13 oder die elastische Bremseinrichtung 6 der Figur 2 einen verdickten Verbindungsabschnitt 13 aufweist. Die Verdickung des Verbindungsabschnitts 13 ist zum Beispiel als Ringwulst ausgebildet.

Die Figur 1A zeigt die elastische Bremseinrichtung 6 in der ersten Position oder Bremsposition ohne Zufuhr von Druckgas, d.h. ohne Antrieb des Laufrads 7. Zumindest eine Bremsfläche steht mit einer Kontaktfläche in Kontakt.

Die Figur 1B zeigt das Wälzlager der Figur 1A, welches (gemäß der Abbildung von links) mit Druckgas 26 versorgt ist und eine zweite Position einnimmt, in welcher die elastische Bremseinrichtung 6 (aufgrund des verringerten oder völlig aufgehobenen Kontaktes mit den Kontaktflächen des Kontaktbereichs 15) keine Bremswirkung oder eine verringerte Bremswirkung ausübt. Das Wälzlager 1 und/ oder ein damit verbundenes Drehteil 7, 8 kann sich somit bei verringerter Bremswirkung oder frei von einer durch die elastische Bremseinrichtung 6 ausgeübten Bremswirkung drehen. Es ist zu erkennen, dass zumindest der Bremsabschnitt 9 durch das durch den Lagerinnenraum 23 fließende Druckgas 26 gebogen ist. Ist der Druckgasstrom 26 durch den Lagerinnenraum 23 beendet, kehrt die elastische Bremseinrichtung 6, insbesondere aufgrund ihrer Vorspannung, in die erste Position (siehe Figur 1A) zurück.

Die elastische Bremseinrichtung 6 der Figur 2 umfasst eine scheiben- oder ringförmiges und im Wesentlichen flaches Bremselement 6A mit einem Verbindungsabschnitt 13A, einem Körperabschnitt und einem Bremsabschnitt 9. Das Bremselement 6A ist aus, insbesondere einem einzigen, Elastomer geformt. Zur Befestigung des Bremselements 6A in der Aufnahme 14 ist ein Sicherungselement 27, zum Beispiel einen Federring oder Sprengring, vorgesehen. Das Sicherungselement 27 ist insbesondere in der Aufnahme 14 angeordnet.

In der der Figur 3 ist eine mehrteilige elastische Bremseinrichtung 6 dargestellt, die ein Bremselement 6A und ein, vorzugsweise metallisches, Stütz- oder Versteifungselement 28 aufweist, welches, insbesondere vollständig, in dem Bremselement 6A aufgenommen und vorzugsweise unlösbar mit dem Bremselement 6A verbunden ist. Vorzugsweise ist das Stütz- oder Versteifungselement 28 zumindest teilweise in dem Verbindungsabschnitt 13 aufgenommen. Vorzugsweise ist das Stütz- oder Versteifungselement 28 zumindest teilweise in der Aufnahme 14 aufgenommen und/ oder unterstützt die Befestigung der elastischen Bremseinrichtung 6 in der Aufnahme 14. Vorzugsweise ist das Stütz- oder Versteifungselement 28 ringförmig ausgebildet.

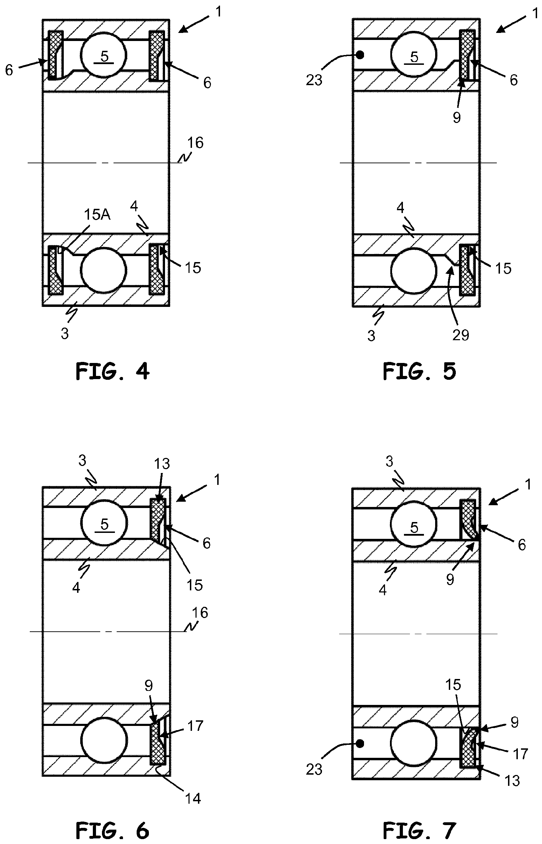

Die Figur 4 zeigt ein Wälzlager 1 mit mehreren, i.e. zwei elastischen Bremseinrichtungen 6. Die Ausstattung eines Wälzlagers 1 mit mehreren elastischen Bremseinrichtungen 6 ist selbstverständlich auch auf alle anderen dargestellten und beschriebenen Wälzlager 1 anwendbar. Es ist des Weiteren zu erkennen, dass die den beiden Bremseinrichtungen 6 zugeordneten Kontaktbereiche 15, 15A unterschiedlich geformt sind. Der Kontaktbereich 15A weist eine gebogene, sich insbesondere in den inneren Laufring 4 konkav erstreckende, Kontaktfläche und der Kontaktbereich 15 zwei in der Schnittdarstellung im Wesentlichen plane Kontaktflächen auf, wie sie im Vorstehenden bereits beschrieben wurden.

Die Figur 5 zeigt ein Wälzlager 1 mit einer elastischen Bremseinrichtung 6, wobei der an der Außenseite des inneren Laufrings 4 vorgesehene Kontaktbereich 15 zur Vergrößerung der Kontaktfläche und/ oder zur Erhöhung der Bremswirkung einen Vorsprung 29 umfasst, der in den Lagerinnenraum 23 zwischen dem inneren Laufring 4 und dem äußeren Laufring 3 ragt. Aufgrund dieses Vorsprungs 29 ist auch die Fläche des Bremsabschnitts 9, insbesondere des als Bremsfläche wirkenden Abschnitts der Unterseite der elastischen Bremseinrichtung 6, vergrößert.

Bei dem Wälzlager 1 der Figur 6 weist der Kontaktbereich 15 eine einzige Kontaktfläche auf, die schräg zu der Längs- oder Drehachse 16 des Wälzlagers 1 angeordnet ist. Der Kontaktbereich 15 ist somit insbesondere konusförmigen geformt. Der Kontaktbereich 15 erstreckt sich insbesondere bis zu einem freien Ende des inneren Laufrings 4. Aufgrund der konusförmigen Ausbildung des Kontaktbereichs 15 verjüngt sich der Endbereich des inneren Laufrings 4 und/ oder der Durchmesser des Lagerinnenraums 23 vergrößert sich in Richtung des freien Endes.

Die Figur 7 zeigt ein Ausführungsbeispiel eines Wälzlagers 1 mit einer elastischen Bremseinrichtung 6, wobei der Kontaktbereich 15 eine einzige, gerade, parallel zur Mittel- oder Drehachse 16 des Wälzlagers 1 angeordnete Kontaktfläche umfasst, die durch einen nicht rückversetzen oder nicht vorstehenden Abschnitt der Außenseite des inneren Laufrings 4 gebildet ist.

Die elastische Bremseinrichtung 6 der Figur 7 ist durch den Einbau in das Wälzlager 1 (d.h. ohne Druckgaszufluss) derart deformiert ist, dass zumindest ein Teil der elastischen Bremseinrichtung 6, insbesondere der Körperabschnitt 17 und/ oder der Bremsabschnitt 9, gebogen ist und/ oder von dem zumindest einen Rollkörper 5 wegweist. Dieses Ausführungsbeispiel, bei dem durch den Einbau der, vorzugsweise ursprünglich flachen, elastischen Bremseinrichtung 6 in das Wälzlager 1 eine Deformation oder Biegung der elastischen Bremseinrichtung 6 bewirkt ist, ist insbesondere in Zusammenhang mit den Figuren 12A - 18 im Detail beschrieben.

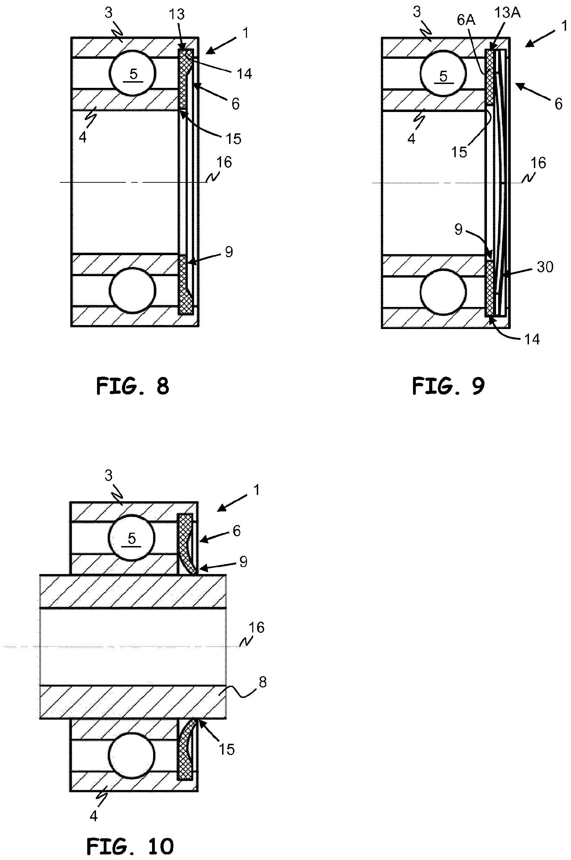

Die Figuren 8, 9 und 10 zeigen jeweils ein erfindungsgemäßes Wälzlager 1 bei dem der Kontaktbereich 15 eine einzige, insbesondere gewinkelt zur Mittel- oder Drehachse 16 des Wälzlagers 1 angeordnete, Kontaktfläche aufweist, welche die Stirnfläche des inneren Laufrings 4 umfasst. Des Weiteren hat der äußere Laufring 3 eine größere axiale (bezogen auf die Drehachse 16) Ausdehnung als der innere Laufring 4. Vorzugsweise befindet sich die Aufnahme 14 zumindest teilweise in jenem Teil des äußeren Laufrings 3, welcher den inneren Laufring 4 axial überragt. Vorzugsweise ist die Kontaktfläche im Wesentlichen rechtwinkelig zur Drehachse 16 angeordnet.

Die Aufnahme 14 des in der Figur 9 dargestellten Wälzlagers 1 ist für zumindest einen Teil der elastischen Bremseinrichtung 6, insbesondere ein im Wesentlichen flaches und/ oder scheibenförmiges Bremselement 6A, als Führung ausgebildet ist, in welcher dieses Teil 6A, insbesondere das gesamte Teil 6A, bewegbar oder verschiebbar ist. Das Teil 6A ist insbesondere entlang oder parallel zur Drehachse 16 verschiebbar. Das Bremselement 6A ist insbesondere steif ausgebildet, so dass es durch Druckgas nicht oder nur unwesentlich verformt wird. Alternativ ist ein Teil des Bremselement 6A steif ausgebildet, so dass es durch Druckgas nicht oder nur unwesentlich verformt wird, und ein anderer Teil ist, insbesondere durch ein Druckgas, elastisch verformbar.

Es ist des Weiteren ein Federelement 30 vorgesehen, welches das Teil 6A in die erste Position oder Bremsposition vorspannt. Um in die zweite Position zu gelangen, muss das Teil 6A durch den Druckgasstrom 26 entgegen der Federkraft bewegt werden. Das Federelement 30 ist insbesondere in der Aufnahme 14 angeordnet. Das Federelement 30 ist zum Beispiel als Blattfeder oder Tellerfeder ausgebildet.

Bei dem Wälzlager 1 der Figur 10 ist eine Kontaktfläche des Kontaktbereichs 15 an einem mit dem Wälzlager 1 verbundenen Bauteil oder Drehteil vorgesehen. Das Bauteil oder Drehteil umfasst insbesondere eine Hohlwelle, vorzugsweise eine Hohlwelle der Werkzeughaltevorrichtung 8. Vorzugsweise umfasst die Kontaktfläche einen Abschnitt des Außenmantels des Drehteils 8. Zusätzlich kann auch die Stirnfläche des inneren Laufrings 4 als Kontaktfläche ausgebildet sein.

Die elastische Bremseinrichtung 6 der Figur 10 ist durch den Einbau in das Wälzlager 1 (d.h. ohne Druckgaszufluss) und insbesondere durch den Kontakt mit dem Bauteil oder Drehteil 8 derart deformiert, dass zumindest ein Teil der elastischen Bremseinrichtung 6, insbesondere der Körperabschnitt 17 und/ oder der Bremsabschnitt 9, gebogen ist und/ oder von dem zumindest einen Rollkörper 5 wegweist. Dieses Ausführungsbeispiel, bei dem durch den Einbau der, vorzugsweise ursprünglich flachen, elastischen Bremseinrichtung 6 eine Deformation oder Biegung der elastischen Bremseinrichtung 6 bewirkt ist, ist insbesondere in Zusammenhang mit den Figuren 12A - 18 im Detail beschrieben.

Die Figur 11 zeigt ein medizinisches oder dentales, druckgasbetriebenes Handstück 2, insbesondere Winkelstück, mit einem durch Druckgas in Drehung versetzbaren Drehteil. Das Drehteil umfasst zumindest eine Hohlwelle oder einen Teil einer Werkzeughaltevorrichtung 8. Mit dem Drehteil verbunden oder als Teil des Drehteils ausgebildet ist ein druckgasbetriebenes Laufrad 7 mit mehreren Schaufeln 7A. Durch die Versorgung mit Druckgas (über eine Druckgasleitung 34) wird das Laufrad 7 und das damit verbundene Drehteil, insbesondere die Werkzeughaltevorrichtung 8 und ein gegebenenfalls damit verbundenes Werkzeug, in bekannter Weise in Bewegung, d.h. Rotation versetzt.

Es ist des Weiteren zu erkennen, dass das Drehteil 8 und das Laufrad 7 durch zwei Wälzlager 1 mit einer elastischen Bremseinrichtung 6 gemäß der Figur 10 drehbaren gelagert sind, wodurch insbesondere ein rascheres Abbremsen des Drehteils 7, 8 bei einer Unterbrechung der Zufuhr von Druckgas ermöglicht wird. Selbstverständlich ist es möglich ein derartiges Handstück 2 auch nur mit einem Wälzlager 1 gemäß der Figur 10 zu versehen. Ebenso ist es selbstverständlich möglich, eines oder mehrere der in den anderen Figuren dargestellten Wälzlager 1 in dem Handstück 2 zu verbauen. Wenn zwei Wälzlager 1 in dem Handstück 2 vorgesehen sind, so können diese zwei Wälzlager 1 einen im Wesentlichen identen Aufbau haben (so wie in der Figur 11 dargestellt), oder sie können unterschiedliche Wälzlager 1 aufweisen, insbesondere ein Wälzlager 1 mit einer elastischen Bremseinrichtung 6 und ein Wälzlager 1 ohne einer elastischen Bremseinrichtung 6 oder zwei Wälzlager 1 mit unterschiedlichen elastischen Bremseinrichtungen 6.

Das Handstück 2 umfasst des Weiteren eine vorzugsweise länglich und hohl oder rohrförmig ausgebildete Außenhülse 31, so dass diese insbesondere einen Innenraum bildet. Die Außenhülse 31 ist vorzugsweise derart gebogen, dass sie zumindest zwei gewinkelt zueinander angeordnete Abschnitte aufweist, insbesondere einen länglichen Griffteil 32 und einen daran anschließenden Kopfteil 33, in dem das Drehteil oder rotierbare Teil 7, 8 aufgenommen ist. In der Außenhülse 31, insbesondere des Kopfteils 33, ist eine Werkzeugaufnahmeöffnung 35 vorgesehen, durch welche ein Werkzeug in die Werkzeughaltevorrichtung 8 einsteckbar und daraus entnehmbar ist.

Die Figuren 12A - 18 zeigen weitere Ausführungsbeispiele von elastischen Bremseinrichtungen 6 und Wälzlagern 1 mit derartigen elastischen Bremseinrichtungen 6, wobei die elastischen Bremseinrichtungen 6 durch den Einbau in das Wälzlager 1 derart deformiert sind, dass zumindest ein Teil der elastischen Bremseinrichtung 6, insbesondere der Körperabschnitt 17 und/ oder der Bremsabschnitt 9, gebogen ist/ sind und insbesondere von dem zumindest einen Rollkörper (5) wegweist.

Die gesamte elastische Bremseinrichtung 6 der Figuren 12A - 18 ist einteilig und aus, vorzugsweise einem einzigen, Elastomer geformt. Insbesondere ist somit zum Befestigen der elastischen Bremseinrichtung 6 an dem Wälzlager 1 der ausschließlich aus Elastomer gebildete Verbindungsabschnitt 13 in der Aufnahme 14 des äußeren Laufrings 3 aufgenommen.

Wie vorzugsweise aus den Figuren 12, 12B, 14A, 14B zu erkennen ist, ist die elastische Bremseinrichtung 6 vor dem Einbau in das Wälzlager 1, d.h. insbesondere vor dem Einfügen des Verbindungsabschnitts 13 in die dafür vorgesehene Aufnahme 14, scheibenförmig und/ oder im Wesentlichen flach ausgebildet. Die elastische Bremseinrichtung 6 ist oder wird erst durch den Einbau in das Wälzlager 1 deformiert, wodurch sie im verbauten Zustand ihre scheibenförmige und/ oder im Wesentlichen flache Form verändert bzw. diese Form verändert wird.

Bei Zufuhr von Druckgas 26, d.h. bei Einnahme der zweiten Position, wird der Körperabschnitt 17 und/ oder der Bremsabschnitt 9 zusätzlich bewegt, gebogen und/ oder zusätzlich deformiert, insbesondere von dem Rollkörper 5 weg (siehe Figuren 13B, 15B). Insbesondere ist oder wird somit die durch den Einbau in das Wälzlager 1 bewirkte Deformation bei Zufuhr von Druckgas 26 weiter verstärkt. Insbesondere weisen die durch die Zufuhr von Druckgas 26 bewirkte Deformation und die durch den Einbau in das Wälzlager 1 bewirkte Deformation der elastischen Bremseinrichtung 6 somit in etwa dieselbe Bewegungsrichtung auf.

Die Deformation der elastischen Bremseinrichtung 6 ist durch einen Kontakt zumindest eines Teils des Bremsabschnitts 9, eventuell zusätzlich auch des Körperabschnitts 17, mit dem Kontaktbereich 15 an dem inneren Laufring 4 oder an einem mit dem Wälzlager 1 verbundenen Bauteil (siehe Figur 10) bewirkt. Der Kontakt mit dem Kontaktbereich 15 erfolgt insbesondere durch zumindest eines der folgenden Elemente: den Innenumfang 12; einen Abschnitt der Seitenfläche 36 (siehe Figur 12B) der elastischen Bremseinrichtung 6, insbesondere der dem Rollelement 5 zugewandten Unterseite der elastischen Bremseinrichtung 6; einen als Bremsfläche wirkenden Abschnitt des Körperabschnitts 17, der insbesondere dem Rollelement 5 zugewandt ist; eine Kante 19 am Innenumfang 12 oder die den Innenumfang 12 begrenzt.

Die Deformation der elastischen Bremseinrichtung 6 durch einen Kontakt zumindest eines Teils des Bremsabschnitts 9 mit dem Kontaktbereich 15 ist vorzugsweise zumindest teilweise rückgängig, wenn die elastische Bremseinrichtung 6 aus dem Wälzlager 1 entfernt ist oder wird.

Wie in den Figuren 13A, 15A und 17 zu erkennen ist, ist durch die Deformation eine Biegung 18 in der elastischen Bremseinrichtung 6, insbesondere in dem Körperabschnitt 17 und/ oder in dem Bremsabschnitt 9 gebildet. Vorzugsweise beginnt oder befindet sich die Biegung 18 nahe dem oder anschließend an den Verbindungsabschnitt 13, 13A. Die Figuren 13A, 15A und 17 zeigen auch, dass die elastische Bremseinrichtung 6 durch die Deformation insbesondere eine sich verjüngende Form und/ oder eine Form ähnlich einem Kegelstumpfmantel einnimmt.

Aufgrund der durch den Kontakt bewirkten Deformation sind der Bremsabschnitt 9 und der Kontaktbereich 15, der von dem Bremsabschnitt 9 zum Abbremsen der Drehbewegung kontaktiert wird, gewinkelt zueinander angeordnet.

Die Aufnahme 14 für den Verbindungsabschnitt 13, 13A ist am äußeren Laufring 3 des Wälzlagers 1 vorgesehen. Die radiale Entfernung zwischen dem Außenumfang 11 und dem Innenumfang 12 der elastischen Bremseinrichtung 6 ist in einem nicht deformierten Zustand (siehe Figur 12A, 14A) größer als die - bezogen auf die Drehachse 16 des Wälzlagers 1 - radiale Entfernung zwischen einer Rückwand 21 der Aufnahme 14 und einem der Rückwand 21 (radial) gegenüber liegenden Abschnitt der Außenseite des inneren Laufrings 4.

In den Figuren 13A, 13B, 15A, 15B, 17 (und auch der Figur 6) ist zu erkennen, dass der Kontaktbereich 15 gewinkelt oder schräg zu der Drehachse 16 des Wälzlagers 1 angeordnet ist. Insbesondere ist der Kontaktbereich 15 als schiefe Ebene zur Drehachse 16 des Wälzlagers 1 oder konusförmig ausgebildet. Der Kontaktbereich 15 verjüngt sich kontinuierlich von einem freien Ende des Wälzlagers 1, in Richtung des Rollkörpers 5. Der Kontaktbereich 15 weist auch keine Rücksprünge, Vorsprünge, Einstiche, Nuten etc. auf und ist somit als im Wesentlichen glatte Fläche ausgebildet.

Das Wälzlager 1 der Figuren 13A, 13B, 15A, 15B, 17 weist einen Vorsprung 22 auf, zum Beispiel eine Nase oder Schulter oder Ringschulter, der in den Lagerinnenraum 23 zwischen dem inneren Laufring 4 und dem äußeren Laufring 3 ragt. Der Vorsprung 22 ist anschließend an ein Rollkörper-nahes Ende des Kontaktbereichs 15 angeordnet oder als Teil des Kontaktbereichs 15, an dessen Rollkörper-nahen Ende ausgebildet. Vorzugsweise bildet der Vorsprung 22 eine Sicherung, damit die elastische Bremseinrichtung 6, insbesondere der Bremsabschnitt, den Kontaktbereich 15 nicht verlässt und/ oder mit dem Rollelement 5 in Kontakt kommt, wenn die Abmessung (Länge) der elastischen Bremseinrichtung durch Verschleiß abnimmt.

Schließlich umfasst das Wälzlager 1 der Figuren 13A, 13B, 15A, 15B, 17 ein an dem äußeren Laufring 3 befestigtes Dichtelement oder Deckelement 24 zum Abdichten des Lagerinnenraums 23 zwischen dem inneren Laufring 4 und dem äußeren Laufring 3. Das Dichtelement 24 ist insbesondere dafür vorgesehen, dass kein oder wenig Schmiermittel aus dem Wälzlager 1 austritt und/ oder wenig oder keine Verschmutzung in das Wälzlager 1 eindringt. Das Dichtelement oder Deckelement 24 ist insbesondere starr ausgebildet, so dass es durch Druckgasstrom 26 nicht oder nur unwesentlich bewegbar ist. Das Dichtelement oder Deckelement 24 ist insbesondere scheibenförmig oder als Deckscheibe ausgebildet.

Das Dichtelement 24 erstreckt sich in dem Lagerinnenraum 23 von dem äußeren Laufring 3 in Richtung des inneren Laufrings 4, ohne diesen zu kontaktieren. Somit sind der innere Laufring 4 und das Dichtelement 24 durch einen Spalt voneinander getrennt.

Das medizinische oder dentale, druckgasbetriebene Handstück 2 oder Winkelstück der Figur 18 entspricht in seinem Aufbau dem Handstück 2 der Figur 11, so dass zur Vermeidung von Wiederholungen auf die Beschreibung des Handstücks 2 der Figur 11 verwiesen wird.

Das Handstück 2 der Figur 18 umfasst zur Lagerung des Drehteils oder rotierbaren Teils 7, 8 ein Wälzlager 1, das eine elastische Bremseinrichtung 6 aufweist, die durch den Einbau in das Wälzlager 1 deformiert ist, so wie dies im Vorstehenden beschrieben ist. Das andere Wälzlager 36 umfasst keine elastische Bremseinrichtung 6. Die Positionen der beiden Wälzlager 1, 36 innerhalb des Handstück 2 können selbstverständlich getauscht werden, so dass das Wälzlager 1 näher zur Werkzeugaufnahmeöffnung 35 und das Wälzlager 36 weiter davon entfernt angeordnet ist.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Wälzlager (1) für ein medizinisches oder dentales, druckgasbetriebenes Handstück (2), umfassend: einen äußeren Laufring (3), einen inneren Laufring (4), zumindest einen Rollkörper (5), der zwischen dem äußeren Laufring (3) und dem inneren Laufring (4) angeordnet ist, und eine am Wälzlager (1) vorgesehene, elastische Bremseinrichtung (6), die kontaktierend auf das Wälzlager (1) einwirkt, um eine Drehbewegung des Wälzlagers (1) und eines mit dem Wälzlager (1) verbundenen Bauteils (7, 8) abzubremsen, wobei die elastische Bremseinrichtung (6), insbesondere zumindest ein Bremsabschnitt (9) der Bremseinrichtung (6), durch Druckgas derart betätigbar ist, dass die durch den Kontakt zwischen der elastischen Bremseinrichtung (6) und dem Wälzlager (1) bewirkte Bremswirkung veränderbar ist, wobei die elastische Bremseinrichtung (6) ringförmig mit einer zentralen Öffnung (10) ausgebildet ist und einen Außenumfang (11), einen die zentrale Öffnung (10) begrenzenden Innenumfang (12) und einen Bremsabschnitt (9) zum Abbremsen der Drehbewegung des Wälzlagers (1) aufweist, wobei an dem Außenumfang (11) ein Verbindungsabschnitt (13, 13A) zum Befestigen der elastischen Bremseinrichtung (6) in einer Aufnahme (14) des Wälzlagers (1) vorgesehen ist, wobei der Bremsabschnitt (9) der elastischen Bremseinrichtung (6) zum Abbremsen der Drehbewegung einen Kontaktbereich (15) an dem inneren Laufring (4) kontaktiert, wobei der Kontaktbereich (15) gewinkelt zu einer Drehachse (16) des Wälzlagers (1) angeordnet ist, **dadurch gekennzeichnet, dass**
bezogen auf eine Drehachse (16) des Wälzlagers (1) der äußere Laufring (3) eine größere axiale Ausdehnung oder Höhe als der innere Laufring (4) hat, so dass der Kontaktbereich (15) eine Stirnfläche des inneren Laufrings (4) umfasst.

2. Wälzlager (1) nach Anspruch 1, **dadurch gekennzeichnet, dass** der Kontaktbereich (15) im Wesentlichen rechtwinkelig zur Drehachse (16) angeordnet ist.

3. Wälzlager (1) nach Anspruch 1 oder 2, **dadurch gekennzeichnet, dass** der äußere Laufring (3) aufgrund seiner größeren axialen Ausdehnung oder Höhe gegenüber dem inneren Laufring (4) einen Überstand aufweist, wobei an dem Überstand zumindest ein Teil der Aufnahme (14) für den Verbindungsabschnitt (13, 13A) der elastischen Bremseinrichtung (6) vorgesehen ist.

4. Wälzlager (1) nach einem der vorstehenden Ansprüche, **dadurch gekennzeichnet, dass**
die gesamte elastische Bremseinrichtung (6) einteilig ausgebildet und aus Elastomer geformt ist, so dass zum Befestigen der elastischen Bremseinrichtung (6) an dem Wälzlager (1) der ausschließlich aus Elastomer gebildete Verbindungsabschnitt (13, 13A) ohne zusätzliches, separates Befestigungselement in der Aufnahme (14) für den Verbindungsabschnitt (13, 13A) an dem äußeren Laufrings (3) aufgenommen ist.

5. Wälzlager (1) nach einem der vorstehenden Ansprüche, **dadurch gekennzeichnet, dass**
eine Höhe (H3) des Verbindungsabschnitts (13, 13A) im Wesentlichen gleich einer Höhe (H4) des Bremsabschnitts (9) und/ oder eines Körperabschnitts (17) der elastischen Bremseinrichtung (6) ist, wobei der Körperabschnitt (17) den Verbindungsabschnitt (13, 13A) mit dem Bremsabschnitt (9) verbindet.

6. Wälzlager (1) nach einem der vorstehenden Ansprüche 1-4, **dadurch gekennzeichnet, dass**
der Verbindungsabschnitt (13, 13A) der elastischen Bremseinrichtung (6) verdickt ist und eine in Bezug auf die Drehachse (16) axial größere Höhe (H1) aufweist als die übrige elastische Bremseinrichtung (6), insbesondere als ein Körperabschnitt (17) und/ oder der Bremsabschnitt (9).

7. Wälzlager (1) nach einem der vorstehenden Ansprüche, **dadurch gekennzeichnet, dass**
die gesamte elastische Bremseinrichtung (6) einschließlich des Verbindungsabschnitts (13, 13A) aus einem Elastomer gebildet ist.

8. Wälzlager (1) nach Anspruch 7, **dadurch gekennzeichnet, dass** die Aufnahme (14) für den Verbindungsabschnitt (13, 13A) an dem äußeren Laufring (3) vorgesehen ist, wobei der aus Elastomer gebildete Verbindungsabschnitt (13, 13A) in der Aufnahme (14) mit Spiel aufgenommen ist.

9. Wälzlager (1) nach einem der vorstehenden Ansprüche, **dadurch gekennzeichnet, dass**
die elastische Bremseinrichtung (6) durch den Einbau in das Wälzlager (1) derart deformiert ist, dass zumindest ein Teil der elastischen Bremseinrichtung (6), insbesondere ein Körperabschnitt (17), der den Verbindungsabschnitt (13, 13A) mit dem Bremsabschnitt (9) verbindet, und/ oder der Bremsabschnitt (9), gebogen ist und insbesondere von dem zumindest einen Rollkörper (5) wegweist.

10. Wälzlager (1) nach Anspruch 9, **dadurch gekennzeichnet, dass** die elastische Bremseinrichtung (6) vor dem Einbau in das Wälzlager (1) scheibenförmig und/ oder im Wesentlichen flach ausgebildet ist.

11. Wälzlager (1) nach Anspruch 9 oder 10, **dadurch gekennzeichnet, dass** die Deformation der elastischen Bremseinrichtung (6) durch einen Kontakt des Bremsabschnitts (9) mit dem Kontaktbereich (15) an dem inneren Laufring (4) oder an einem mit dem Wälzlager (1) verbundenen Bauteil (7, 8) bewirkt ist.

12. Wälzlager (1) nach einem der vorstehenden Ansprüche 1-3, 5-7 oder 9-11, **dadurch gekennzeichnet, dass**
die elastische Bremseinrichtung (6), insbesondere der zumindest eine Verbindungsabschnitt (13, 13A) der Bremseinrichtung (6), durch ein zusätzliches Befestigungselement oder Sicherungselement, zum Beispiel einen Federring, einen Sprengring, ein Halteelement, ein Federelement, in der Aufnahme (14) befestigt ist.

13. Wälzlager (1) nach einem der vorstehenden Ansprüche 1-3, 5, 7 oder 8, **dadurch gekennzeichnet, dass**
die Aufnahme (14) für den Verbindungsabschnitt (13, 13A) an dem äußeren Laufring (3) als Führung für die elastische Bremseinrichtung (6, 6A) ausgebildet ist, in welcher die elastische Bremseinrichtung (6) verschiebbar, insbesondere entlang oder parallel zur Drehachse (16), aufgenommen ist, wobei ein Federelement (30) vorgesehen ist, welches die elastische Bremseinrichtung (6, 6A) in eine Bremsposition vorspannt.

14. Wälzlager (1) nach einem der vorstehenden Ansprüche, **gekennzeichnet durch** ein Dichtelement (24) zum Abdichten eines Lagerinnenraums (23) zwischen dem inneren Laufring (4) und dem äußeren Laufring (3), wobei der zumindest eine Rollkörper (5) zwischen dem Dichtelement (24) und der elastischen Bremseinrichtung (6) angeordnet ist.

15. Medizinisches oder dentales, druckgasbetriebenes Handstück (2), umfassend: ein durch Druckgas in Drehung versetzbares Drehteil (6, 7) und zumindest ein Wälzlager (1) gemäß einem der vorstehenden Ansprüche zur drehbaren Lagerung des Drehteils (6, 7).

## Claims

1. Rolling bearing (1) for a medical or dental handpiece (2) operated by compressed gas, comprising: an outer race (3), an inner race (4), at least one rolling body (5) which is arranged between the outer race (3) and the inner race (4), and an elastic braking device (6) which is provided on the rolling bearing (1) and acts in a contacting manner on the rolling bearing (1) in order to brake a rotational movement of the rolling bearing (1) and of a component (7, 8) connected to the rolling bearing (1), wherein the elastic braking device (6), in particular at least a braking portion (9) of the braking device (6), can be actuated by compressed gas in such a way that the braking effect brought about by the contact between the elastic braking device (6) and the rolling bearing (1) can be varied, wherein the elastic braking device (6) is formed in an annular shape with a central opening (10) and has an outer periphery (11), an inner periphery (12) defining the central opening (10), and a braking portion (9) for braking the rotational movement of the rolling bearing (1), wherein a connecting portion (13, 13A) for mounting the elastic braking device (6) in a receptacle (14) of the rolling bearing (1) is provided on the outer periphery (11), wherein the braking portion (9) of the elastic braking device (6) contacts a contact area (15) on the inner race (4) for braking the rotational movement, wherein the contact area (15) is arranged at an angle to an axis of rotation (16) of the rolling bearing (1) **characterized in that**
relative to an axis of rotation (16) of the rolling bearing (1), the outer race (3) has a greater axial extent or height than the inner race (4), so that the contact area (15) encompasses an end face of the inner race (4).

2. Rolling bearing (1) according to Claim 1, **characterized in that** the contact area (15) is arranged substantially at right angles to the axis of rotation (16).

3. Rolling bearing (1) according to Claim 1 or 2, **characterized in that** due to its greater axial extent or height the outer race (3) has a projection relative to the inner race (4), wherein at least a part of the receptacle (14) for the connecting portion (13, 13A) of the elastic braking device (6) is provided on the projection.

4. Rolling bearing (1) according to any of the preceding Claims, **characterized in that** the entire elastic braking device (6) is formed in one piece and is made of elastomer, so that for fastening the elastic braking device (6) to the rolling bearing (1) the connecting portion (13, 13A) made exclusively of elastomer is received in the receptacle (14) for the connecting portion (13, 13A) on the outer race (3) without an additional, separate fastening element.

5. Rolling bearing (1) according to any of the preceding Claims, **characterized in that** a height (H3) of the connecting portion (13, 13A) is substantially equal to a height (H4) of the braking portion (9) and/or a body portion (17) of the elastic braking device (6), the body portion (17) connecting the connecting portion (13, 13A) to the braking portion (9).

6. Rolling bearing (1) according to any of the preceding Claims 1 - 4, **characterized in that**
the connecting portion (13, 13A) of the elastic braking device (6) is thickened and has an axially greater height (H1) relative to the axis of rotation (16) than the rest of the elastic braking device (6), in particular than a body portion (17) and/or the braking portion (9).

7. Rolling bearing (1) according to any of the preceding Claims, **characterized in that** the entire elastic braking device (6) including the connecting portion (13, 13A) is made of elastomer.

8. Rolling bearing (1) according to Claim 7, **characterized in that** the receptacle (14) for the connecting portion (13, 13A) is provided on the outer race (3), wherein the connecting portion (13, 13A) made of elastomer is accommodated in the receptacle (14) with clearance.

9. Rolling bearing (1) according to any of the preceding Claims, **characterized in that** the elastic braking device (6) is deformed by installation in the rolling bearing (1), such that at least a part of the elastic braking device (6), in particular a body portion (17) which connects the connecting portion (13, 13A) to the braking portion (9), and/ or the braking portion (9), is bent and, in particular, faces away from the at least one rolling body (5).

10. Rolling bearing (1) according to Claim 9, **characterized in that** the elastic braking device (6) is disc-shaped and/ or substantially flat before installation in the rolling bearing (1).

11. Rolling bearing (1) according to Claim 9 or 10, **characterized in that** the deformation of the elastic braking device (6) is caused by a contact of the braking portion (9) with the contact area (15) on the inner race (4) or on a component (7, 8) connected to the rolling bearing (1).

12. Rolling bearing (1) according to any of the preceding Claims 1-3, 5-7 or 9-11, **characterized in that**
the elastic braking device (6), in particular the at least one the connecting portion (13, 13A) of the braking device (6), is secured in the receptacle (14) by an additional fastening element or securing element, for example a spring ring, a snap ring, a retaining element, a spring element.

13. Rolling bearing (1) according to any of the preceding Claims 1-3, 5, 7 or 8, **characterized in that**
the receptacle (14) for the connecting portion (13, 13A) on the outer race (3) is formed as guide for the elastic braking device (6, 6A), in which the elastic braking device (6) is accommodated displaceably, in particular along or parallel to the axis of rotation (16), wherein a spring element (30) is provided, which biases the elastic braking device (6, 6A) into a braking position.

14. Rolling bearing (1) according to any of the preceding Claims, **characterized by** a sealing element (24) for sealing an inner bearing space (23) between the inner race (4) and the outer race (3), wherein the at least one rolling body (5) is arranged between the sealing element (24) and the elastic braking device (6).

15. Medical or dental handpiece (2) operated by compressed gas, comprising: a rotary part (6, 7) that can be set in rotation by compressed gas, and at least one rolling bearing (1) according to any of the preceding Claims for rotatably supporting the rotary part (6, 7).

## Revendications

1. Palier à roulements (1) pour une pièce à main (2) médicale ou dentaire, entraînée par un gaz comprimé, comprenant: un chemin de roulement (3) extérieur, un chemin de roulement (4) intérieur, au moins un corps de roulement (5), qui est placé entre le chemin de roulement (3) extérieur et le chemin de roulement (4) intérieur, et un dispositif de freinage (6) élastique, qui agit par contact sur le palier à roulements (1), pour freiner un mouvement de rotation du palier à roulements (1) et d'un composant (7, 8) assemblé avec le palier à roulements (1), le dispositif de freinage (6) élastique, notamment au moins une portion de freinage (9) du dispositif de freinage (6) étant susceptible d'être actionnée par un gaz comprimé de telle sorte que l'effet de freinage provoqué par le contact entre le dispositif de freinage (6) élastique et le palier à roulements (1) soit variable, le dispositif de freinage (6) élastique étant conçu de forme annulaire, avec un orifice (10) et comportant une circonférence extérieure (11), une circonférence intérieure (12) délimitant l'orifice (10) et une portion de freinage (9), destinée à freiner le mouvement de rotation du palier à roulements (1), sur la circonférence extérieure (11) étant prévu un segment d'assemblage (13, 13A), destiné à fixer le dispositif de freinage (6) dans un logement (14) du palier à roulements (1), la portion de freinage (9) du dispositif de freinage (6) élastique entrant en contact avec une zone de contact (15) sur le chemin de roulement (4) intérieur pour freiner le mouvement en rotation, la zone de contact (15) étant placée de manière angulaire par rapport à un axe de rotation (16) du palier à roulements (1), **caractérisé en ce**
**qu'**en rapport à un axe de rotation (16) du palier à roulements (1), le chemin de roulement (3) extérieur fait preuve d'une extension axiale ou hauteur supérieure à celle du chemin de roulement (4) intérieur, de telle sorte que la zone de contact (15) inclue une face frontale du chemin de roulement (4) intérieur.

2. Palier à roulements (1) selon la revendication 1, **caractérisé en ce que** la zone de contact (15) est placée sensiblement à angle droit par rapport à l'axe de rotation (16).

3. Palier à roulements (1) selon la revendication 1 ou 2, **caractérisé en ce que** du fait de son extension axiale ou hauteur supérieure à celle du chemin de roulement (4) intérieur, le chemin de roulement (3) extérieur comporte un surplomb, sur le surplomb étant prévue au moins une partie du logement (14) pour le segment d'assemblage (13, 13A) du dispositif de freinage (6) élastique.

4. Palier à roulements (1) selon l'une quelconque des revendications précédentes, **caractérisé en ce que**
l'ensemble du dispositif de freinage (6) élastique est conçu en monobloc et est façonné en élastomère, de sorte que pour fixer le dispositif de freinage (6) élastique sur le palier à roulements (1), le segment d'assemblage (13, 13A) constitué exclusivement d'un élastomère soit réceptionné sans un élément de fixation supplémentaire séparé dans le logement (14) pour le segment d'assemblage (13, 13A) sur le chemin de roulement (3) extérieur.

5. Palier à roulements (1) selon l'une quelconque des revendications précédentes, **caractérisé en ce**
**qu'**une hauteur (H3) du segment d'assemblage (13, 13A) est sensiblement égale à une hauteur (H4) de la portion de freinage (9) et / ou d'un segment du corps (17) du dispositif de freinage (6) élastique, le segment du corps (17) assemblant le segment d'assemblage (13, 13A) avec la portion de freinage (9).

6. Palier à roulements (1) selon l'une quelconque des revendications précédentes 1 à 4, **caractérisé en ce que**
le segment d'assemblage (13, 13A) du dispositif de freinage (6) élastique est surépaissi et présente une hauteur axial (H1) supérieure en rapport à l'axe de rotation (16) à celle du reste du dispositif de freinage (6) élastique, notamment d'un segment du corps (17) et / ou de la portion de freinage (9).

7. Palier à roulements (1) selon l'une quelconque des revendications précédentes, **caractérisé en ce que**
l'ensemble du dispositif de freinage (6) élastique incluant le segment d'assemblage (13, 13A) est constitué en un élastomère.

8. Palier à roulements (1) selon la revendication 7, **caractérisé en ce que** le logement (14) pour le segment d'assemblage (13, 13A) est prévu sur le chemin de roulement (3) extérieur, le segment d'assemblage (13, 13A) constitué en élastomère étant réceptionné dans le logement (14) avec un jeu.

9. Palier à roulements (1) selon l'une quelconque des revendications précédentes, **caractérisé en ce que**
le dispositif de freinage (6) élastique est déformé par le montage dans le palier à roulements (1) de telle sorte qu'au moins une partie du dispositif de freinage (6), élastique, notamment un segment du corps (17) qui assemble le segment d'assemblage (13, 13A) avec la portion de freinage (9) et / ou la portion de freinage (9) soit curviligne et notamment s'éloigne de l'au moins un corps de roulement (5).

10. Palier à roulements (1) selon la revendication 9, **caractérisé en ce qu'**avant le montage dans le palier à roulements (1), le dispositif de freinage (6) élastique est conçu en forme de disque et / ou en étant sensiblement plat.

11. Palier à roulements (1) selon la revendication 9 ou 10, **caractérisé en ce que** la déformation du dispositif de freinage (6) élastique est provoquée par un contact de la portion de freinage (9) avec la zone de contact (15) sur le chemin de roulement (4) intérieur ou sur un composant (7, 8) assemblé avec le palier à roulements (1).

12. Palier à roulements (1) selon l'un quelconque des revendications précédentes 1 à 3, 5 à 7 ou 9 à 11, **caractérisé en ce que**
le dispositif de freinage (6) élastique, notamment l'au moins un segment d'assemblage (13, 13A) du dispositif de freinage (6) est fixé par un élément de fixation ou élément de blocage supplémentaire, par exemple une bague élastique, un circlip, un élément de maintien, un élément à ressort dans le logement (14).

13. Palier à roulements (1) selon l'une quelconque des revendications précédentes 1 à 3, 5, 7 ou 8, **caractérisé en ce que**
le logement (14) pour le segment d'assemblage (13, 13A) est conçu sur le chemin de roulement (3) extérieur en tant que guidage pour le dispositif de freinage (6, 6A) élastique, dans lequel le dispositif de freinage (6) élastique est réceptionné en étant déplaçable, notamment le long ou à la parallèle de l'axe de rotation (16), un élément à ressort (30) étant prévu, lequel précontraint le dispositif de freinage (6, 6A) élastique dans une position de freinage.

14. Palier à roulements (1) selon l'une quelconque des revendications précédentes, **caractérisé par**
un élément d'étanchéité (24), destiné à assurer l'étanchéité d'un espace intérieur (23) du palier, entre le chemin de roulement (4) intérieur et le chemin de roulement (3) extérieur, l'au moins un corps de roulement (5) étant placé entre l'élément d'étanchéité (24) et le dispositif de freinage (6) élastique.

15. Pièce à main (2) médicale ou dentaire, entraînée par un gaz comprimé, comprenant: une pièce rotative (6, 7) susceptible d'être amenée en rotation par un gaz comprimé et au moins un palier à roulements (1) selon l'une quelconque des revendications précédentes, pour le logement en rotation de la pièce rotative (6, 7).
